# EUROPEAN PATENT SPECIFICATION

(11) **EP 4 247 909 B1**
(45) Date of publication and mention of the grant of the patent: **28.01.2026**
(21) Application number: 21811387.6
(22) Date of filing: 23.11.2021
(51) Int. Cl.: C09J 4/00, C08F 220/18, C08F 220/20, C08F 220/28, C08F 220/30

(54) **ACRYLATE STRUCTURAL ADHESIVE FREE OF MMA**
MMA-FREIER ACRYLATSTRUKTURKLEBSTOFF
ADHÉSIF STRUCTURAL EN ACRYLATE EXEMPT DE MMA

(30) Priority: 23.11.2020 EP 20209123
(43) Date of publication of application: 27.09.2023
(73) Proprietor: SciGrip Adhesives Ltd., Washington NE37 3JD (GB)
(72) Inventor: ELKAIM, Eric, 67600 Mussig (FR); HUTHER EBERSOHL, Estelle, 67330 Kirrwiller (FR); RAHME, Roland, 67860 Rhinau (FR)
(74) Representative: Forresters IP LLP
(86) International application number: PCT/EP2021/082685
(87) International publication number: WO 2022/106722

(56) References cited:
- WO-A1-2020/178105
- CN-A- 111 040 644
- JP-A- 2018 197 328
- JP-B2- 6 526 648
- US-A1- 2019 276 715
- US-A1- 2020 102 483

## Description

The invention relates to a two-component system of a first component and a second component spatially separated from one another, wherein the reaction of the first component and the second component after mixing results in a acrylate structural adhesive. The two-component system comprises not more than 5.0 wt.-% methyl methacrylate, relative to the total weight of the two-component system, or no methyl methacrylate at all.

The use of acrylate structural adhesives has significantly grown in recent years along with the use of composites and combinations of different materials to create lightweight components. Bond designs for these lightweight constructions become more complex and sometimes designers cannot avoid undesirable peel forces.

US 2006 0024521 discloses articles that include an optical film and an optically clear pressure sensitive adhesive layer on at least one outer surface of the optical film. The pressure sensitive adhesive layer in the various articles contain a (meth)acrylate block copolymer.

US 2010 0218892 relates to a maleimide terminated polyimide incorporated into a two-part acrylic structural adhesive system. The maleimide terminated polyimide of the various embodiments of the invention provide improving thermal stability, strength, and toughness.

US 2010 0286331 discloses a two-component or multicomponent system which cures by means of a redox initiator system and has a controllable pot life and comprises A) 0.8-69.94% by weight of an emulsion polymer which can be obtained by polymerization of a mixture; B) 30-99.14% by weight of one or more ethylenically unsaturated monomers; C) 0.05-10% by weight of peroxides; and if appropriate further constituents; characterized in that the component A) and the component C) are stored together and at least one constituent of the component B) is stored together from the components A) and C), with the separately stored constituent of the component B) being selected so that the ability of this constituent of the component B) to swell the polymer A) is sufficiently high for the polymer-fixed activator e) of the polymer A) to be able to react with the component C).

US 2011 0083804 relates to a composition for a structural acrylic adhesive that comprises an adhesion promoter including a phosphate ester and a high molecular-weight polyamine as a polymerization accelerator.

US 2011 0143061 discloses a two-component adhesive composition suitable for structural bonding of concrete/concrete, steel/concrete, or steel/steel, as well as for structural strengthening and reinforcing applications with fiber reinforced polymers. The composition includes a resin component A with a peroxide containing at least one norbornene group and at least one methacrylate containing compound and a hardener component B comprising a peroxide and at least one thiol. The resin component A and the hardener component B are spatially separated from one another to inhibit any reaction before mixing of the components.

US 2012 0171915 relates to a pressure sensitive adhesive that comprises the reaction product of: (a) from about 25 to about 95 parts by weight of at least one acrylic acid ester of a monohydric alcohol whose homopolymer has a T_{g} less than 0° C, (b) from 0 to about 75 parts by weight of at least one non-polar ethylenically unsaturated monomer whose homopolymer has a solubility parameter of no greater than 10.50 and a T_{g} greater than 15° C; and (c) from about 5 to about 35 parts by weight of at least one polar ethylenically unsaturated monomer whose homopolymer has a solubility parameter of greater than 10.50 and a Tg greater than 15° C.

US 2013 0292054 discloses a composition for a structural acrylic adhesive that comprises an adhesion promoter including a phosphate ester and a high molecular-weight polyamine as a polymerization accelerator.

US 2014 0053976 relates to composition which can be used in structural adhesives, essentially comprising a polymer system suitable for being used in a methacrylate matrix, said polymer system comprising styrene-free block copolymers formed from at least two blocks and preferably from at least three blocks, and said polymer system being solubilized in a matrix of linear or branched acrylic and/or methacrylic monomers and/or of cyclic methacrylates and/or of aromatic methacrylates.

US 2014 0329959 discloses two part cyanoacrylate/free radical curable adhesive systems.

US 2015 0151522 relates to a composite laminate made from unsaturated polyester resin that can be bonded using polyurethane adhesive without secondary treatment of the composite laminate and with improved bond strength and failure mode. Also disclosed are methods of making such composite laminates.

US 2017 0306191 relates to a composition for a structural acrylic adhesive that comprises an adhesion promoter including a phosphate ester and a high molecular-weight polyamine as a polymerization accelerator.

US 2018 0179422 discloses pressure sensitive adhesives which can be converted to form structural adhesives. The pressure sensitive adhesives include a blend of acrylic PSA resins in combination with one or more particular urethane (meth)acrylate oligomers.

JP 2018 197328 relates to a two-part main agent type acrylic adhesive comprising: an agent A containing a (meth)acrylic monomer and an organic peroxide; and an agent B containing a (meth)acrylic monomer and a reductant. Each of the agents A and B contains, as the (meth)acrylic monomer, three (meth)acrylates, namely, a hydroxyalkyl (meth)acrylate represented by general formula (1), an alkyl (meth)acrylate represented by general formula (2), and an epoxy (meth)acrylate represented by general formula (3).

JP 6 526648 relates to an adhesive agent composition for temporary fixation such that members fixed thereby do not detach during processing and do not separate during a post-processing cleaning step, specifically an adhesive agent composition comprising (1) a monofunctional (meth)acrylate monomer having a hydroxyl group and an acyclic saturated hydrocarbon linked by an ester bond, (2) a monofunctional (meth)acrylate monomer having cyclic hydrocarbons linked by an ester bond, (3) a polyfunctional (meth)acrylate monomer that does not have an ethylene glycol structure, (4) a thermal radical polymerization initiator, and (5) a reducing agent, wherein, a total of 100 parts by mass of constituents (1), (2) and (3) includes 50-98 parts by mass of constituent (1), 1-40 parts by mass of constituent (2), and 1-30 parts by mass of constituent (3).

US 2019 276715 discloses an adhesive composition having high adhesiveness to polyamides. An adhesive composition for bonding adherends comprising a polyamide, comprising the following components (1) to (4): (meth)acrylates (1), excluding the component (2), comprising the following ingredients (1-1), (1-2), and (1-3): a (meth)acrylate (1-1), excluding an ingredient (1-3), having an aromatic group; a (meth)acrylate (1-2) having a hydroxy group; and a (meth)acrylate (1-3) represented by general formula (A); an acidic phosphate compound (2); a polymerization initiator (3); and a reducing agent (4) comprising a transition metal salt.

CN111 040 644 relates to an acrylate structural adhesive capable of photocatalytic polymerization. The acrylate structural adhesive consists of a component A and a component B according to a volume ratio of 10:1, wherein the component A comprises, by weight, 40 to 60 parts of an acrylate monomer, 1 to 10 parts of methacrylic acid, 15 to 30 parts of toughening rubber, 15 to 25 parts of a toughening filler, 0.5 to 5 parts of photolatent amine, 0.05 to 0.2 part of a stabilizer and 0.5 to 1 part of a coupling agent; the component B comprises, by weight, 20 to 50 parts of an oxidant, 20 to 40 parts of epoxy resin, 20 to 40 parts of a plasticizer, 2 to 10 parts of a filler and 0.05 to 1 part of pigment.

US 2020 0216717 relates to a composition suitable as (meth)acrylic adhesive composition comprising a multistage polymer in form of polymeric particles and a (meth)acrylic polymer, its process of preparation, and its use. In particular the present invention relates to a structural (meth)acrylic adhesive composition comprising a multistage polymer in form of polymeric particles made by a multistage process and a (meth)acrylic polymer, its process of preparation and its use. More particularly the present invention relates to structural (meth)acrylic adhesive composition made from a two part composition comprising a multistage polymer in form of polymeric particles made by a multistage process and a (meth)acrylic polymer, its process of preparation, and its use.

US 2020 102483 discloses a composition having excellent adhesiveness to poorly adhesive materials such as polyolefins. The composition comprises the following (1) to (2): (1) (meth)acrylates containing the following (1-1) to (1-3): (1-1) a (meth)acrylate having a hydroxyl group, (1-2) an alkyl (meth)acrylate, and (1-3) a (meth)acrylate having a cyclic ether skeleton, and (2) an organoboron compound. The content ratio of (1-1), (1-2), and (1-3) is (1-1):(1-2):(1-3)=(10 to 90):(5 to 80):(5 to 80) in mass ratio in 100 parts by mass of (1) (meth)acrylates.

WO 2020 178105 relates to a two-component structural adhesive, i.e. to a two-component system of a first component and a second component spatially separated from one another, wherein the reaction of the first component and the second component after mixing results in a structural adhesive. The first component comprises at least four of a (meth)acrylic acid, a C₁₋₆-alkyl (meth)acrylate, a cycloalkyl (meth)acrylate, a hydroxy-C₁₋₆-alkyl (meth)acrylate, and/or a glycolether (meth)acrylate. The second component comprises a peroxide polymerization initiator. Additionally, the first component and/or the second component comprises at least two toughening agents (a first toughening agent and a second toughening agent); the second toughening agent differing from the first toughening agent; a first impact modifier; and optionally a second impact modifier differing from the first impact modifier.

However, the two-component acrylate structural adhesives of the prior art are not satisfactory in every respect and there is a demand for improved two-component acrylate structural adhesives.

The polymerization of acrylic or methacrylic monomers in two-component acrylate structural adhesives is typically an exothermic process such that the two-component system, after the first component and the second component have been mixed with one another, is heated in the course of polymerization and curing. As heat dissipation is slow, the temperature rises especially when curing times are short. In conventional acrylate structural adhesives, the increased temperature may cause evaporation of volatile not yet polymerized constituents such as methyl methacrylate (MMA) having a boiling point around 105 °C only. Evaporation does not only result in a change of composition but especially can cause bubble formation that may significantly deteriorate the performance of the acrylate structural adhesive e.g. with respect to mechanical strength. This issue may become especially problematic when the content of volatile constituents such as MMA in the two-component system is comparatively high and when the adhesive is intended to be used for high gap-filling, e.g. of up to 100 mm, at short open times and short times to handling strength, respectively. It would principally be desirable to reduce the amount of constituents with relatively low boiling points such as MMA.

Further, the comparatively high amount of MMA in conventional two-component acrylate structural adhesives leads to MMA odor and relatively high risk of flammability. This may become problematic in metal-working shops and other places where typical odor such as distinctive MMA odor is restricted. A high flammability induces a high risk of fire and/or explosion if there is a source of ignition nearby.

Still further, conventional two-component acrylate structural adhesives are relatively harmful to health due to their comparatively high amount of substances, which are classified as CMR- or toxic substances.

It is an object of the invention to provide two-component acrylate structural adhesives having advantages compared to the acrylate structural adhesives of the prior art. The two-component acrylate structural adhesives should be free of methyl methacrylate (MMA) and provide excellent mechanical performance, especially in terms of elongation at break, T-peel strength and shear strength, and should be useful for high gap-filling without boiling, i.e. without or at least with reduced bubble formation due to heat formation upon curing, at short working times and fixture times. Further, the acrylate structural adhesives should be low in odor and nonflammable.

This object has been achieved by the subject-matter of the appended claims.

It has been surprisingly found that combinations of a monomer having general formula (a) H₂C=CR-C(=O)-O-C₂₋₁₄-alkyl-OH with a mononer having general formula (b) H₂C=CR-C(=O)-OH and a mononer having general formula (d) H₂C=CR-C(=O)-O-C₁₋₆-alkyl-(hetero)aryl and preferably additionally at least one monomer selected another monomer of formula (a) H₂C=CR-C(=O)-O-C₂₋₁₄₋alkyl-OH

(c) H₂C=CR-C(=O)-O-C₂₋₁₈-alkyl,

(e) H₂C=CR-C(=O)-O-C₂₋₁₄-alkyl-O-P(=O)(OH)₂,

(f) H₂C=CR-C(=O)-O-C₂₋₁₄-alkyl-O-C(=O)-C₁₋₆-alkyl-C(=O)-C₁₋₆-alkyl,

(g) H₂C=CR-C(=O)-[O-CH₂-CH₂]ₙ-OH,

(h) H₂C=CR-C(=O)-[O-CH₂-CH₂]ₙ-O-C₁₋₆-alkyl,

(i) H₂C=CR-C(=O)-[O-CH₂-CH(CH₃)]ₙ-OH,

(j) H₂C=CR-C(=O)-[O-CH₂-CH(CH₃)]ₙ-O-C₁₋₆-alkyl,

(k) H₂C=CR-C(=O)-O-C₂₋₁₄-(hetero-)cycloalkyl,

(l) H₂C=CR-C(=O)-O-C₁₋₆-alkyl-C₂₋₁₄-(hetero-)cycloalkyl,

(m) H₂C=CR-C(=O)-O-C₇₋₁₄-bi- or tri-cycloalkyl,

(n) H₂C=CR-C(=O)-O-C₁₋₆-alkyl-C₇₋₁₄-bi- or tri-cycloalkyl,

(o) H₂C=CR-C(=O)-O-(hetero-)aryl,

(p) H₂C=CR-C(=O)-O-C₂₋₁₄-alkyl-O-C(=O)-CR=CH₂,

(q) H₂C=CR-C(=O)-[O-CH₂-CH₂]ₙ-O-C(=O)-CR=CH₂,

(r) H₂C=CR-C(=O)-O-C₇₋₁₄-bi- or tri-cycloalkyl-O-C(=O)-CR=CH₂,

(s) H₂C=CR-C(=O)-O-C₁₋₆-alkyl-C₇₋₁₄-bi- or tri-cycloalkyl-C₁₋₆-alkyl-O-C(=O)-CR=CH₂,

(t) H₂C=CR-C(=O)-[O-CH₂-CH₂]ₙ-O-phenyl-CR'R"-phenyl-O-[CH₂-CH₂-O]ₙ-C(=O)-CR=CH₂, and

[H₂C=CR-C(=O)-O-C₁₋₆-alkyl]₃-C₂₋₁₄-(hetero-)cycloalkyl (u)

provide two-component acrylate structural adhesives with excellent mechanical properties while enabling reduction of the relative content of MMA (not more than 5 wt.%) or even allowing for complete omission of MMA.

Further, it has been surprisingly found that two-component acrylate structural adhesives free of MMA with a content of at least 3.0 wt.-% of H₂C=CR-C(=O)-O-C₂₋₁₄-alkyl-OH, especially hydroxyethyl methacrylate, provide certain advantages, in certain instances may improve mechanical properties and result in less bubble formation compared to conventional two-component acrylate structural adhesives.

Still further, it has been surprisingly found that the reduction of the content of MMA in favor of a mixture of monomers with comparatively high boiling points and flash points suppresses bubble formation even at high gaps. Thus, the present invention unexpectedly provides very fast curing two-component acrylate structural adhesives that are suitable to fill high gaps without boiling. This is a significant advantage compared to conventional two-component acrylate structural adhesives having high content of MMA amounting to 60 wt.-% and even more. Further, this combination of monomers makes it possible to provide a two-component acrylate structural adhesive with less MMA odor compared to conventional two-component acrylate structural adhesives. Still further, this combination of monomers makes it possible to provide nonflammable two-component acrylate structural adhesives.

Yet further, it has been surprisingly found that two-component acrylate structural adhesives without methyl methacrylate (MMA) have the same properties as conventional, MMA containing two-component acrylate structural adhesives. Principally desirable properties include good adhesion on different substrates (e. g. plastics and metals such as aluminum), high T-peel strength (e.g. T-peel strength of at least 9 N/mm when determined according to ASTM D1876 - 08(2015)e1) and high elongation of at least 50% at a Young's modulus of at least 700 MPa when determined according to ASTM method D638 - 14.

Furthermore, it has been surprisingly found that two-component acrylate structural adhesives without MMA offer a wide range of products with different reactivity and different mechanical properties, e. g. on the one hand products with low elongation in the range of 10% to 40% at a very high Young's modulus of at least 1 GPa as well as on the other hand products with high elongation of 70% at a relatively lower Young's modulus of at least 700 MPa, when determined according to ASTM method D638 - 14.

Moreover, it has been surprisingly found that two-component acrylate structural adhesives with a content of at most 5.0 wt.-%, relative to the total weight of the two-component system, of MMA or substances being classified as CMR- or toxic substances are less harmful to health compared to conventional two-component acrylate structural adhesives.

A first aspect of the invention relates to a two-component system of
(i) a first component comprising a monomer mixture which comprises or essentially consists of
   - a monomer of formula (a) H₂C=CR-C(=O)-O-C₂₋₁₄-alkyl-OH; preferably H₂C=CR-C(=O)-O-C₂H₄-OH or H₂C=CR-C(=O)-O-C₃H₆-OH; a mononer of formula (b) H₂C=CR-C(=O)-OH; preferably methacrylic acid and a mononer of formula (d) H₂C=CR-C(=O)-O-C₁₋₆₋alkyl-(hetero)aryl, wherein the (hetero-)aryl moiety is optionally substituted with one, two or three substituents independently of one another selected from -C₁₋₆-alkyl; preferably H₂C=CR-C(=O)-O-CH₂-C₆H₅; and preferably additionally at least one monomer selected from
   - another monomer of formula (a) H₂C=CR-C(=O)-O-C₂₋₁₄-alkyl-OH; preferably H₂C=CR-C(=O)-O-C₂H₄-OH or H₂C=CR-C(=O)-O-C₃H₆-OH;
   - a monomer of formula (c) H₂C=CR-C(=O)-O-C₂-₁₈-alkyl; preferably H₂C=CR-C(=O)-O-C₄H₉, H₂C=CR-C(=O)-O-C₈H₁₇, H₂C=CR-C(=O)-O-C₁₂H₂₅, or H₂C=CR-C(=O)-O-C₁₄H₂₉;
   - a monomer of formula (e) H₂C=CR-C(=O)-O-C₂₋₁₄-alkyl-O-P(=O)(OH)₂; preferably H₂C=CR-C(=O)-O-C₂H₄-O-P(=O)(OH)₂;
   - a monomer of formula (f) H₂C=CR-C(=O)-O-C₂₋₁₄-alkyl-O-C(=O)-C₁₋₆-alkyl-C(=O)-C₁₋₆-alkyl; preferably H₂C=CR-C(=O)-O-C₂H₄-O-C(=O)-CH₂-C(=O)-CH₃;
   - a monomer of formula (g) H₂C=CR-C(=O)-[O-CH₂-CH₂]ₙ-OH, wherein index n is an integer within the range of from 1 to 12;
   - a monomer of formula (h) H₂C=CR-C(=O)-[O-CH₂-CH₂]ₙ-O-C₁₋₆-alkyl, wherein index n is an integer within the range of from 1 to 12; preferably H₂C=CR-C(=O)-[O-CH₂-CH₂]₂-O-C₄H₉ or H₂C=CR-C(=O)-[O-CH₂-CH₂]₁₁-O-CH₃;
   - a monomer of formula (i) H₂C=CR-C(=O)-[O-CH₂-CH(CH₃)]ₙ-OH, wherein index n is an integer within the range of from 1 to 12; preferably H₂C=CR-C(=O)-[O-CH₂-CH(CH₃)₅-OH or H₂C=CR-C(=O)-[O-CH₂-CH(CH₃)₆-OH;
   - a monomer of formula (j) H₂C=CR-C(=O)-[O-CH₂-CH(CH₃)ₙ-O-C₁₋₆-alkyl, wherein index n is an integer within the range of from 1 to 12;
   - a monomer of formula (k) H₂C=CR-C(=O)-O-C₂₋₁₄-(hetero-)cycloalkyl, wherein the (hetero-)cycloalkyl moiety is optionally substituted with one, two or three substituents independently of one another selected from -C₁₋₆-alkyl; preferably H₂C=CR-C(=O)-O-C₆H₁₁, H₂C=CR-C(=O)-O-C₆H₈-(CH₃)₃, or H₂C=CR-C(=O)-O-C₆H₁₀-C₄H₉;
   - a monomer of formula (1) H₂C=CR-C(=O)-O-C₁₋₆-alkyl-C₂₋₁₄-(hetero-)cycloalkyl, wherein the (hetero-)cycloalkyl moiety is optionally substituted with one, two or three substituents independently of one another selected from -C₁₋₆-alkyl; preferably H₂C=CR-C(=O)-O-CH₂-C₄H₆O₂-C₂H₅;
   - a monomer of formula (m) H₂C=CR-C(=O)-O-C₇₋₁₄-bi- or tri-cycloalkyl, wherein the bi- or tri-cycloalkyl moiety is optionally substituted with one, two or three substituents independently of one another selected from -C ₁₋₆-alkyl; preferably H₂C=CR-C(=O)-O-C₁₀H₁₇;
   - a monomer of formula (n) H₂C=CR-C(=O)-O-C₁₋₆-alkyl-C₇₋₁₄-bi- or tri-cycloalkyl, wherein the bi- or tri-cycloalkyl moiety is optionally substituted with one, two or three substituents independently of one another selected from -C₁₋₆-alkyl;
   - a monomer of formula (o) H₂C=CR-C(=O)-O-(hetero-)aryl, wherein the (hetero-)aryl moiety is optionally substituted with one, two or three substituents independently of one another selected from -C₁₋₆-alkyl;
   - a monomer of formula (p) H₂C=CR-C(=O)-O-C₂₋₁₄-alkyl-O-C(=O)-CR=CH₂; preferably H₂C=CR-C(=O)-O-C₆H₁₂-O-C(=O)-CR=CH₂
   - a monomer of formula (q) H₂C=CR-C(=O)-[O-CH₂-CH₂]ₙ-O-C(=O)-CR=CH₂; wherein index n is an integer within the range of from 1 to 12; preferably H₂C=CR-C(=O)-[O-CH₂-CH₂]₃-O-C(=O)-CR=CH₂ or H₂C=CR-C(=O)-[O-CH₂-CH₂]₄-O-C(=O)-CR=CH₂;
   - a monomer of formula (r) H₂C=CR-C(=O)-O-C₇₋₁₄-bi- or tri-cycloalkyl-O-C(=O)-CR=CH₂, wherein the bi- or tri-cycloalkyl moiety is optionally substituted with one, two or three substituents independently of one another selected from -C₁₋₆-alkyl;
   - a monomer of formula (s) H₂C=CR-C(=O)-O-C₁₋₆-alkyl-C₇₋₁₄-bi- or tri-cycloalkyl-C₁₋₆-alkyl-O-C(=O)-CR=CH₂, wherein the bi- or tri-cycloalkyl moiety is optionally substituted with one, two or three substituents independently of one another selected from -C₁₋₆-alkyl; preferably H₂C=CR-C(=O)-O-CH₂-C₁₀H₁₄-CH₂-O-C(=O)-CR=CH₂;
   - a monomer of formula (t) H₂C=CR-C(=O)-[O-CH₂-CH₂]ₙ-O-phenyl-CR'R"-phenyl-O-[CH₂-CH₂-O]ₙ-C(=O)-CR=CH₂, wherein R' and R" independently of one another mean -H or -C₁₋₆-alkyl; wherein index n is an integer within the range of from 1 to 16; preferably H₂C=CR-C(=O)-[O-CH₂-CH₂]₂-O-phenyl-C(CH₃)₂-phenyl-O-[CH₂-CH₂-O]₂-C(=O)-CR=CH₂; and
   - a monomer of formula (u) [H₂C=CR-C(=O)-O-C₁₋₆-alkyl]₃-C₂₋₁₄-(hetero-)cycloalkyl, wherein the (hetero-)cycloalkyl moiety is optionally substituted with one, two or three substituents =O; preferably [H₂C=CR-C(=O)-O-C₂H₄]₃-N₃(C=O)₃;
      wherein in each case R independently of one another means -H or -CH₃; and
(ii) a second component comprising
   - a polymerization initiator;

   wherein the two-component system comprises not more than 5.0 wt.-% methyl methacrylate, relative to the total weight of the two-component system, or no methyl methacrylate at all;
   wherein the first component and the second component are spatially separated from one another; and
   wherein the reaction of the first component and the second component after mixing results in a acrylate structural adhesive.

The invention provides fast-curing two-component acrylate structural adhesives that are preferably toughened. The acrylate structural adhesives preferably provide primerless adhesion to most metals, thermoplastics and composites. The ratio between open time and time to handling strength has been optimized versus other two-component systems on the market thereby minimizing cycle times. The two-component systems according to the invention do not boil at higher bonding gaps - an ideal solution for repair or backfill of large composite structures. Due to their low odor, the two-component systems according to the invention can be used in metal-working shops and other places where typical odor such as distinctive MMA odor is restricted. The two-component systems according to the invention are preferably thixotropic also creating value due to fast-mixing and rapid extrusion without sacrificing non-sag properties.

The two-component system according to the invention comprises a first component and a second component. While it is principally possible that the two-component system comprises further components in addition to the first and second component, preferably the two-component system essentially consists of the first component and the second component.

In its non-activated state, the first component and the second component are spatially separated from one another. In this non-activated state, the two-component system may be stored typically having a shelf-life of at least several months. For example, the two-component system may be made commercially available in a cartridge comprising two separate chambers where the first component is contained in a first chamber of the cartridge and the second component is contained in a second chamber of the cartridge.

In its activated state, the first component and the second component are mixed with one another thereby inducing chemical reaction that finally results in formation of a acrylate structural adhesive. For example, when being contained in spatially separated chambers of a cartridge, the first component may be mixed with the second component when exiting the cartridge e.g. through a nozzle or die for application to a substrate. As the first component and the second component are mixed with one another, the ingredients thereof can chemically react with one another.

As chemical reaction takes some time that highly depends upon the ingredients of the two-component system, it is typically distinguished between open time and curing time. The open time is usually regarded as the time window immediately after mixing during which the two-component system may be applied to a substrate, flow and may still be deformed. Open time may be regarded as a lag time before chemical reaction has started or at least has proceeded to a certain extent at which applying and processing the two-component system becomes difficult because of advancing polymerization and curing. The curing time is usually regarded as the time window following the open time until the two-component system has completely reacted, i.e. until polymerization and curing reactions have been completed. The open time and the curing time may independently of one another last from a few minutes to several hours and there is no clear-cut between open time and curing time; transition may be smooth.

For certain industrial applications it can be desirable to specifically adjust open time and curing time. In certain embodiments it can be desirable to have an open time within the range of from 1 to 10 minutes and subsequently to have a curing time that is as short as possible. When using the two-component system e.g. on an assembly line, this will provide sufficient time for applying the two-component system to the desired substrate, but also will allow for further processing after a short period or even immediately thereafter, as polymerization and curing proceeds quickly. Thus, polymerization and curing will not significantly delay operation on the assembly line.

For the purpose of the specification, a acrylate structural adhesive is to be regarded as an adhesive that can be used to produce a load-bearing joint. Preferably, a acrylate structural adhesive is useful for engineering applications where joints typically have lap shear strengths of at least 1 MPa and, more normally, at least 10 MPa. Acrylate structural adhesives are used extensively in automotive and aircraft industry for bonding metal-to-metal, metal-to-composite and composite-to-composite parts.

A skilled person recognizes that in its non-activated state, certain ingredients of the two-component system can be present in either component without inducing premature chemical reaction. Thus, unless these components comprise reactive functional groups, it makes no big difference whether these ingredients are contained in the first component or in the second component or in both the first and the second component. This is particularly the case for toughening agents and impact modifiers.

However, the polymerizable monomers of the two-component system on the one hand and the radical polymerization initiator of the two-component system on the other hand should be stored separate of one another. For that reason, the first component of the two-component system comprises the monomers; whereas the second component comprises the polymerization initiator.

Unless expressly stated otherwise, all percentages are weight percentages and are relative to the total weight of the two-component system, i.e. the overall weight of the first and second component.

It is also contemplated that the monomer mixture comprises no monomer of formula (a) or only minor amounts thereof. Thus, another aspect of the disclosure relates to a two-component system of
(i) a first component comprising a monomer mixture which comprises or essentially consists of one, two, three or more monomers independently of one another selected from monomers (a), (b), (c), (d), (e), (f), (g), (h), (i), (j), (k), (1), (m), (n), (o), (p), (q), (r), (s), (t), and (u) as defined above; and
(ii) a second component comprising a polymerization initiator;

wherein the two-component system comprises not more than 5.0 wt.-% methyl methacrylate, relative to the total weight of the two-component system, or no methyl methacrylate at all;
wherein the first component and the second component are spatially separated from one another; and wherein the reaction of the first component and the second component after mixing results in a acrylate structural adhesive;
preferably wherein the two-component system comprises not more than 5.0 wt.-% methyl acrylate, relative to the total weight of the two-component system, or no methyl acrylate at all.

The two-component system according to the invention comprises not more than 5.0 wt.-% methyl methacrylate, relative to the total weight of the two-component system, or no methyl methacrylate at all.

Preferably, the two-component system according to the invention likewise comprises not more than 5.0 wt.-% methyl acrylate, relative to the total weight of the two-component system, or no methyl acrylate at all.

In case that the two-component system does comprise methyl methacrylate and/or methyl acrylate, due to their nature these monomers are contained in the first component, i.e. as part of the monomer mixture.

In preferred embodiments, the two-component system according to the invention independently of one another comprises not more than 4.0 wt.-%, preferably not more than 3.0 wt.-%, more preferably not more than 2.0 wt.-%, still more preferably not more than 1.5 wt.-%, yet more preferably not more than 1.0 wt.-%, even more preferably not more than 0.5 wt.-%, most preferably not more than 0.1 wt.-% methyl acrylate and/or methyl acrylate, in each case relative to the total weight of the two-component system, and in particular no methyl acrylate and no methyl acrylate at all.

The first component comprises a monomer mixture which in turn comprises or essentially consists of certain monomers, namely at least one monomer of formula (a) at least one monomer of formula (b) and at least one monomer of formula (d) with at least one additional monomer selected from the group consisting of monomers (a), (c) and (e) through (u).

Besides the monomer mixture, the first component preferably contains additional ingredients such as tougheners and/or impact modifiers, fillers, and other ingredients that are conventionally contained in two-component acrylate structural adhesives. Thus, any content or percentage referring to the first component is related to the total amount of the monomer mixture and the additional ingredients that are contained in the first component.

For the purpose of the specification, the monomer mixture principally encompasses any ethylenically unsaturated species that is capable of undergoing radical polymerization reaction, especially acrylic acid, methacrylic acid, acrylic acid esters and methacrylic acid esters. Thus, any content or percentage referring to the monomer mixture is related to the total amount of these monomers contained in the mixture. Tougheners or impact modifiers, however, are not to be regarded as monomers in the meaning of the invention, even if they contain residual ethylenically unsaturated groups (e.g. acrylic or methacrylic functional groups) that in principle are still capable of undergoing radical polymerization and being incorporated into a propagating polymer chain, respectively.

Preferably, monomers in the meaning of the invention, i.e. monomers encompassed by the term "monomer mixture" have a molecular weight of not more than 600 g/mol, preferably not more than 550 g/mol. Thus, in a preferred embodiment, any theoretically radically polymerizable species having a molecular weight of more than 600 g/mol, preferably more than 550 g/mol, is not to be regarded as part of the monomer mixture, but is to be regarded as additional ingredient. Preferably, any monomer in the meaning of the invention is either (meth)acrylic acid or a (meth)acrylic acid ester, preferably satisfying the above requirement with respect to maximum molecular weight.

Preferably, the monomer mixture comprises or essentially consists of a monomer of formula (a), a monomer of formula (b), a monomer of formula (d), and a monomer of formula (e).

Preferably, the two-component system comprises neither methyl methacrylate, nor tetrahydrofurfuryl methacrylate, nor glycerol formal methacrylate, nor phenoxyethyl methacrylate.

Preferably, the two-component system comprises neither methyl acrylate, nor methyl methacrylate, nor tetrahydrofurfuryl methacrylate, nor glycerol formal methacrylate, nor phenoxyethyl methacrylate.

Preferably, the monomer of formula (a) has a content of at least 3.0 wt.-%, relative to the total weight of the monomer mixture.

The monomer mixture of the present invention comprises or essentially consists of a monomer (a), a monomer (b), a monomer (d) and at least one monomer selected from the group consisting of (c), (e), (f), (g), (h), (i), (j), (k), (1), (m), (n), (o), (p), (q), (r), (s), (t), and (u).

Preferably, the monomer mixture comprises at least 2 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C. The boiling point is preferably determined in accordance with ASTM method D1078 - 11(2019).

Preferably, the monomer mixture comprises at least 3 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C.

Preferably, the monomer mixture comprises at least 4 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C.

Preferably, the monomer mixture comprises at least 5 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C.

Preferably, the monomer mixture comprises at least 6 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C.

Preferably, the monomer mixture comprises at least 7 monomers or essentially consists of monomers having a boiling point of at least 110 °C; preferably at least 120 °C, more preferably at least 130 °C, still more preferably at least 140 °C, yet more preferably at least 150 °C, even more preferably at least 160 °C, most preferably at least 170 °C, and in particular at least 180 °C.

Preferably the monomer mixture comprises at least 2 monomers or essentially consists of monomers having a boiling point of at most 400 °C.

Preferably, the monomer mixture comprises at least 2 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C. The flash point is preferably determined in accordance with ASTM method D93 - 20.

Preferably, the monomer mixture comprises at least 3 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C.

Preferably, the monomer mixture comprises at least 4 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C.

Preferably, the monomer mixture comprises at least 5 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C.

Preferably, the monomer mixture comprises at least 6 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C.

Preferably, the monomer mixture comprises at least 7 monomers or essentially consists of monomers having a flash point of at least 20 °C; preferably at least 30 °C, more preferably at least 40 °C, still more preferably at least 50 °C, yet more preferably at least 60 °C, even more preferably at least 70 °C, most preferably at least 80 °C, and in particular at least 90 °C.

Preferably, the monomer mixture comprises at least 2 monomers or essentially consists of monomers having a flash point of at most 200 °C.

Unless expressly stated otherwise, "*(meth)*" within chemical nomenclature of acrylic acid and acrylic acid derivatives such as acrylic acid esters (i.e. acrylates) means either absence or presence of "*meth*", i.e. either acrylic acid and the corresponding derivatives of acrylic acid, or methacrylic acid and the corresponding derivatives of methacrylic acid. In other words, e.g. "*(meth)acrylic acid*" means "*acrylic acid or methacrylic acid*", and likewise "*benzyl (meth)acrylate*" means "*benzyl acrylate or benzyl methacrylate*" (i.e. acrylic acid benzyl ester or methacrylic acid benzyl ester).

Preferably, the monomer of formula (a) is selected from the group consisting of hydroxyethyl (meth)acrylate, hydroxypropyl (meth)acrylate, and hydroxybutyl (meth)acrylate; preferably hydroxyethyl acrylate, hydroxyethyl methacrylate, hydroxypropyl acrylate, or hydroxypropyl methacrylate.

Preferably, the monomer of formula (a) has a content of
- at least 3.0 wt.-%, preferably at least 3.5 wt.-%, more preferably at least 4.0 wt.-%, still more preferably at least 4.5 wt.-%, yet more preferably at least 5.0 wt.-%, even more preferably at least 5.5 wt.-%, most preferably at least 6.0 wt.-%, and in particular at least 6.5 wt.-%; and/or
- at most 35 wt.-%, preferably at most 32 wt.-%, more preferably at most 29 wt.-%, still more preferably at most 26 wt.-%, yet more preferably at most 23 wt.-%, even more preferably at most 20 wt.-%, most preferably at most 17 wt.-%, and in particular at most 14 wt.-%;
in each case relative to the total weight of the first component.

Preferably, the monomer of formula (b) is (meth)acrylic acid; preferably methacrylic acid.

Preferably, the monomer of formula (b) has a content of
- at least 1.6 wt.-%, preferably at least 2.0 wt.-%, more preferably at least 2.4 wt.-%, still more preferably at least 2.8 wt.-%, yet more preferably at least 3.2 wt.-%, even more preferably at least 3.6 wt.-%, most preferably at least 4.0 wt.-%, and in particular at least 4.4 wt.-%; and/or
- at most 10.6 wt.-%, preferably at most 10.2 wt.-%, more preferably at most 9.8 wt.-%, still more preferably at most 9.4 wt.-%, yet more preferably at most 9.0 wt.-%, even more preferably at most 8.6 wt.-%, most preferably at most 8.2 wt.-%, and in particular at most 7.8 wt.-%;
in each case relative to the total weight of the first component.

Preferably, the monomer of formula (c) is H₂C=CR-C(=O)-O-C₃₋₁₆-alkyl, more preferably H₂C=CR-C(=O)-O-C₄₋₁₄-alkyl.

Preferably, the monomer of formula (c) is selected from the group consisting of n-propyl (meth)acrylate, iso-propyl (meth)acrylate, n-butyl (meth)acrylate, tert-butyl (meth)acrylate, sec-butyl (meth)acrylate, iso-butyl (meth)acrylate, 2-ethylhexyl (meth)acrylate, octyl (meth)acrylate, iso-octyl (meth)acrylate, decyl (meth)acrylate, iso-decyl (meth)acrylate, undecyl (meth)acrylate, dodecyl (meth)acrylate, tridecyl (meth)acrylate, tetradecyl (meth)acrylate, hexadecyl (meth)acrylate, and octadecyl (meth)acylate; preferably tert-butyl acrylate, tert-butyl methacrylate, iso-butyl acrylate, iso-butyl methacrylate, 2-ethylhexyl acrylate, 2-ethylhexyl methacrylate, dodecyl acrylate, dodecyl methacrylate, tetradecyl acrylate, or tetradecyl methacrylate.

Preferably, the monomer of formula (c) has a content of
- at least 2.0 wt.-%, preferably at least 4.0 wt.-%, more preferably at least 6.0 wt.-%, still more preferably at least 8.0 wt.-%, yet more preferably at least 10 wt.-%, even more preferably at least 12 wt.-%, most preferably at least 14 wt.-%, and in particular at least 16 wt.-%; and/or
- at most 36 wt.-%, preferably at most 34 wt.-%, more preferably at most 32 wt.-%, still more preferably at most 30 wt.-%, yet more preferably at most 28 wt.-%, even more preferably at most 26 wt.-%, most preferably at most 24 wt.-%, and in particular at most 22 wt.-%;
in each case relative to the total weight of the first component.

Preferably, the monomer of formula (d) is selected from the group consisting of benzyl (meth)acrylate, 2-phenylethyl (meth)acrylate, 3-phenylpropyl (meth)acrylate, and furfuryl (meth)acrylate; preferably benzyl acrylate or benzyl methacrylate.

Preferably, the monomer of formula (d) has a content of
- at least 2.0 wt.-%, preferably at least 3.0 wt.-%, more preferably at least 4.0 wt.-%, still more preferably at least 5.0 wt.-%, yet more preferably at least 6.0 wt.-%, even more preferably at least 7.0 wt.-%, most preferably at least 8.0 wt.-%, and in particular at least 9.0 wt.-%; and/or
- at most 24 wt.-%, preferably at most 22 wt.-%, more preferably at most 20 wt.-%, still more preferably at most 18 wt.-%, yet more preferably at most 16 wt.-%, even more preferably at most 14 wt.-%, most preferably at most 12 wt.-%, and in particular at most 10 wt.-%;
in each case relative to the total weight of the first component.

Preferably, the monomer of formula (e) is selected from the group consisting of 2-(meth)acryloyloxyethyl phosphate, 4-(meth)acryloyloxybutyl phosphate, and 10-(meth)acryloyloxydecyl phosphate; preferably 2-acryloyloxyethyl phosphate or 2-methacryloyloxyethyl phosphate.

Preferably, the monomer of formula (e) has a content of
- at least 1.5 wt.-%, preferably at least 1.7 wt.-%, more preferably at least 1.9 wt.-%, still more preferably at least 2.1 wt.-%, yet more preferably at least 2.3 wt.-%, even more preferably at least 2.5 wt.-%, most preferably at least 2.7 wt.-%, and in particular at least 2.9 wt.-%; and/or
- at most 10.5 wt.-%, preferably at most 10 wt.-%, more preferably at most 9.5 wt.-%, still more preferably at most 9.0 wt.-%, yet more preferably at most 8.5 wt.-%, even more preferably at most 8.0 wt.-%, most preferably at most 7.5 wt.-%, and in particular at most 7.0 wt.-%;
in each case relative to the total weight of the first component.

Preferably, the monomer of formula (f) is selected from the group consisting of 2-(meth)acryloyloxyethyl acetoacetate, 3-(meth)acryloyloxypropyl acetoacetate, 3-(meth)acryloyloxy-2,2-dimethylpropyl acetoacetate, and 3-(meth)acryloyloxy-2,2,4-trimethylpentyl acetoacetate; preferably 2-acryloyloxyethyl acetoacetate or 2-methacryloyloxyethyl acetoacetate.

Preferably, the monomer of formula (f) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

Preferably, the monomer of formula (g) is hydroxy polyethylene glycol (meth)acrylate, wherein index n is 1, 2, 3, 4, 5, 6, 7, 8, 9, 10 or 11; preferably hydroxy diethylene glycol methacrylate; wherein index n indicates the average value of the repeating unit.

Preferably, the monomer of formula (g) has a content of
- at least 1.2 wt.-%, preferably at least 1.5 wt.-%, more preferably at least 1.8 wt.-%, still more preferably at least 2.1 wt.-%, yet more preferably at least 2.4 wt.-%, even more preferably at least 2.7 wt.-%, most preferably at least 3.0 wt.-%, and in particular at least 3.3 wt.-%; and/or
- at most 19 wt.-%, preferably at most 18 wt.-%, more preferably at most 17 wt.-%, still more preferably at most 16 wt.-%, yet more preferably at most 15 wt.-%, even more preferably at most 14 wt.-%, most preferably at most 13 wt.-%, and in particular at most 12 wt.-%;
in each case relative to the total weight of the first component.

Preferably, the monomer of formula (h) is selected from the group consisting of methyl polyethylene glycol (meth)acrylate, wherein index n is 1, 2, 3, 4 or 11, ethyl polyethylene glycol (meth)acrylate, wherein index n is 1, 2, 3, 4, 5, 6, 7, 8, 9, 10 or 11, propyl polyethylene glycol (meth)acrylate, wherein index n is 1, 2, 3, 4, 5, 6, 7, 8, 9, 10 or 11, and butyl polyethylene glycol (meth)acrylate, wherein index n is 1, 2, 3, 4, 5, 6, 7, 8, 9, 10 or 11; preferably methyl polyethylene glycol methacrylate, wherein index n is 11, methyl polyethylene glycol acrylate, wherein index n is 11, butyl diethylene glycol acrylate, or butyl diethylene glycol methacrylate; wherein index n indicates the average value of the repeating unit.

Preferably, the monomer of formula (h) has a content of
- at least 1.2 wt.-%, preferably at least 1.5 wt.-%, more preferably at least 1.8 wt.-%, still more preferably at least 2.1 wt.-%, yet more preferably at least 2.4 wt.-%, even more preferably at least 2.7 wt.-%, most preferably at least 3.0 wt.-%, and in particular at least 3.3 wt.-%; and/or
- at most 19 wt.-%, preferably at most 18 wt.-%, more preferably at most 17 wt.-%, still more preferably at most 16 wt.-%, yet more preferably at most 15 wt.-%, even more preferably at most 14 wt.-%, most preferably at most 13 wt.-%, and in particular at most 12 wt.-%;
in each case relative to the total weight of the first component.

Preferably, the monomer of formula (i) is hydroxy polypropylene glycol (meth)acrylate, wherein index n is 2, 3, 4, 5, 6 or 7; preferably hydroxy polypropylene glycol acrylate, wherein index n is 5, hydroxy polypropylene glycol methacrylate, wherein index n is 5, hydroxy polypropylene glycol acrylate wherein index n is 6, or hydroxy polypropylene glycol methacrylate, wherein index n is 6; wherein index n indicates the average value of the repeating unit.

Preferably, the monomer of formula (i) has a content of
- at least 2.0 wt.-%, preferably at least 4.0 wt.-%, more preferably at least 6.0 wt.-%, still more preferably at least 8.0 wt.-%, yet more preferably at least 10 wt.-%, even more preferably at least 12 wt.-%, most preferably at least 14 wt.-%, and in particular at least 16 wt.-%; and/or
- at most 36 wt.-%, preferably at most 34 wt.-%, more preferably at most 32 wt.-%, still more preferably at most 30 wt.-%, yet more preferably at most 28 wt.-%, even more preferably at most 26 wt.-%, most preferably at most 24 wt.-%, and in particular at most 22 wt.-%;
in each case relative to the total weight of the first component.

Preferably, the monomer of formula (j) is selected from the group consisting of methyl polypropylene glycol (meth)acrylate, wherein index n is 2, 3, 4, 5, 6 or 7, ethyl polypropylene glycol (meth)acrylate, wherein index n is 2, 3, 4, 5, 6 or 7, propyl polypropylene glycol (meth)acrylate, wherein index n is 2, 3, 4, 5, 6 or 7, and butyl polypropylene glycol (meth)acrylate, wherein index n is 2, 3, 4, 5, 6 or 7; preferably methyl tripropylene glycol acrylate or methyl tripropylene glycol methacrylate; wherein index n indicates the average value of the repeating unit.

Preferably, the monomer of formula (j) has a content of
- at least 2.0 wt.-%, preferably at least 4.0 wt.-%, more preferably at least 6.0 wt.-%, still more preferably at least 8.0 wt.-%, yet more preferably at least 10 wt.-%, even more preferably at least 12 wt.-%, most preferably at least 14 wt.-%, and in particular at least 16 wt.-%; and/or
- at most 36 wt.-%, preferably at most 34 wt.-%, more preferably at most 32 wt.-%, still more preferably at most 30 wt.-%, yet more preferably at most 28 wt.-%, even more preferably at most 26 wt.-%, most preferably at most 24 wt.-%, and in particular at most 22 wt.-%;
in each case relative to the total weight of the first component.

Preferably, the monomer of formula (k) is selected from the group consisting of cyclohexyl (meth)acrylate, methyl cyclohexyl (meth)acrylate, dimethyl cyclohexyl (meth)acrylate, trimethyl cyclohexyl (meth)acrylate, and tert-butyl cyclohexyl (meth)acrylate; preferably cyclohexyl acrylate, cyclohexyl methacrylate, trimethyl cyclohexyl acrylate, trimethyl cyclohexyl methacrylate, tert-butyl cyclohexyl acrylate, or tert-butyl cyclohexyl methacrylate.

Preferably, the monomer of formula (k) has a content of
- at least 1.0 wt.-%, preferably at least 2.0 wt.-%, more preferably at least 3.0 wt.-%, still more preferably at least 4.0 wt.-%, yet more preferably at least 5.0 wt.-%, even more preferably at least 6.0 wt.-%, most preferably at least 7.0 wt.-%, and in particular at least 8.0 wt.-%; and/or
- at most 24 wt.-%, preferably at most 23 wt.-%, more preferably at most 22 wt.-%, still more preferably at most 21 wt.-%, yet more preferably at most 20 wt.-%, even more preferably at most 19 wt.-%, most preferably at most 18 wt.-%, and in particular at most 17 wt.-%;
in each case relative to the total weight of the first component.

Preferably, the monomer of formula (1) is selected from the group consisting of cyclic trimethylolpropane formal (meth)acrylate ((5-ethyl-1,3-dioxan-5-yl)methyl acrylate), 2-cyclohexylethyl (meth)acrylate, and 3-cyclohexylpropyl (meth)acrylate; preferably cyclic trimethylolpropane formal acrylate or cyclic trimethylolpropane formal methacrylate.

Preferably, the monomer of formula (1) has a content of
- at least 1.0 wt.-%, preferably at least 2.0 wt.-%, more preferably at least 3.0 wt.-%, still more preferably at least 4.0 wt.-%, yet more preferably at least 5.0 wt.-%, even more preferably at least 6.0 wt.-%, most preferably at least 7.0 wt.-%, and in particular at least 8.0 wt.-%; and/or
- at most 24 wt.-%, preferably at most 23 wt.-%, more preferably at most 22 wt.-%, still more preferably at most 21 wt.-%, yet more preferably at most 20 wt.-%, even more preferably at most 19 wt.-%, most preferably at most 18 wt.-%, and in particular at most 17 wt.-%;
in each case relative to the total weight of the first component.

Preferably, the monomer of formula (m) is selected from the group consisting of isobornyl (meth)acrylate, adamantyl (meth)acrylate, and norbornyl (meth)acrylate; preferably isobornyl acrylate or isobornyl methacrylate.

Preferably, the monomer of formula (m) has a content of
- at least 1.8 wt.-%, preferably at least 2.1 wt.-%, more preferably at least 2.4 wt.-%, still more preferably at least 2.7 wt.-%, yet more preferably at least 3.0 wt.-%, even more preferably at least 3.3 wt.-%, most preferably at least 3.6 wt.-%, and in particular at least 3.9 wt.-%; and/or
- at most 10 wt.-%, preferably at most 9.7 wt.-%, more preferably at most 9.4 wt.-%, still more preferably at most 9.1 wt.-%, yet more preferably at most 8.8 wt.-%, even more preferably at most 8.5 wt.-%, most preferably at most 8.2 wt.-%, and in particular at most 7.9 wt.-%;
in each case relative to the total weight of the first component.

Preferably, the monomer of formula (n) is 2-(1-oxa-4-azaspiro(4.5)dec-4-yl)ethyl (meth)acrylate; preferably 2-(1-oxa-4-azaspiro(4.5)dec-4-yl)ethyl methacrylate.

Preferably, the monomer of formula (n) has a content of
- at least 1.8 wt.-%, preferably at least 2.1 wt.-%, more preferably at least 2.4 wt.-%, still more preferably at least 2.7 wt.-%, yet more preferably at least 3.0 wt.-%, even more preferably at least 3.3 wt.-%, most preferably at least 3.6 wt.-%, and in particular at least 3.9 wt.-%; and/or
- at most 10 wt.-%, preferably at most 9.7 wt.-%, more preferably at most 9.4 wt.-%, still more preferably at most 9.1 wt.-%, yet more preferably at most 8.8 wt.-%, even more preferably at most 8.5 wt.-%, most preferably at most 8.2 wt.-%, and in particular at most 7.9 wt.-%;
in each case relative to the total weight of the first component.

Preferably, the monomer of formula (o) is phenyl (meth)acrylate; preferably phenyl methacrylate.

Preferably, the monomer of formula (o) has a content of
- at least 3.0 wt.-%, preferably at least 4.0 wt.-%, more preferably at least 5.0 wt.-%, still more preferably at least 6.0 wt.-%, yet more preferably at least 7.0 wt.-%, even more preferably at least 8.0 wt.-%, most preferably at least 9.0 wt.-%, and in particular at least 10 wt.-%; and/or
- at most 27 wt.-%, preferably at most 26 wt.-%, more preferably at most 25 wt.-%, still more preferably at most 24 wt.-%, yet more preferably at most 23 wt.-%, even more preferably at most 22 wt.-%, most preferably at most 21 wt.-%, and in particular at most 20 wt.-%;
in each case relative to the total weight of the first component.

Preferably, the monomer of formula (p) is selected from the group consisting of 1,4-butanediol di(meth)acrylate, 1,6-hexanediol di(meth)acrylate, and 1,10-decanediol di(meth)acrylate; preferably 1,6-hexanediol diacrylate or 1,6-hexanediol dimethacrylate.

Preferably, the monomer of formula (p) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

Preferably, the monomer of formula (q) is selected from polyethylene glycol di(meth)acrylates, wherein index n is 1, 2, 3, 4, 5, 6, 7, 8, 9, 10, 11 or 12; preferably triethylene glycol diacrylate, triethylene glycol dimethacrylate, polyethylene glycol diacrylate, wherein index n is 4, or polyethylene glycol dimethacrylate, wherein index n is 4; wherein index n indicates the average value of the repeating unit.

Preferably, the monomer of formula (q) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

Preferably, the monomer of formula (s) is tricyclodecane dimethanol di(meth)acrylate; preferably tricyclodecane dimethanol dimethacrylate.

Preferably, the monomer of formula (s) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

Preferably, the monomer of formula (t) is selected from the group consisting of bisphenol A polyethoxylate di(meth)acrylate, wherein index n is 1.5, 2, 5 or 15; preferably bisphenol A ethoxylate diacrylate, wherein index n is 2, or bisphenol A ethoxylate dimethacrylate, wherein index n is 2.

Preferably, the monomer of formula (t) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

Preferably, the monomer of formula (u) is selected from the group consisting of tris(2-hydroxyethyl) isocyanurate tri(meth)acrylate and 1,3,5-triazine-2,4,6-tris(2-hydroxyethyl) tri(meth)acrylate; preferably tris(2-hydroxyethyl) isocyanurate triacrylate or tris(2-hydroxyethyl) isocyanurate trimethacrylate.

Preferably, the monomer of formula (u) has a content of
- at least 1.0 wt.-%, preferably at least 1.5 wt.-%, more preferably at least 2.0 wt.-%, still more preferably at least 2.5 wt.-%, yet more preferably at least 3.0 wt.-%, even more preferably at least 3.5 wt.-%, most preferably at least 4.0 wt.-%, and in particular at least 4.5 wt.-%; and/or
- at most 9.0 wt.-%, preferably at most 8.5 wt.-%, more preferably at most 8.0 wt.-%, still more preferably at most 7.5 wt.-%, yet more preferably at most 7.0 wt.-%, even more preferably at most 6.5 wt.-%, most preferably at most 6.0 wt.-%, and in particular at most 5.5 wt.-%;
in each case relative to the total weight of the first component.

The monomer mixture of the present invention comprises or essentially consists of the monomer of formula (a), a monomer of formula (b), and a monomer of formula (d).

Preferably, the monomer mixture comprises or essentially consists of the monomer of formula (a), a monomer of formula (b), a monomer of formula (d), and a monomer of formula (e).

Preferably, the monomer mixture comprises or essentially consists of the monomer of formula (a), a monomer of formula (b), a monomer of formula (d), and a monomer of formula (e), and a monomer of formula (h).

Preferably, the monomer mixture comprises or essentially consists of the monomer of formula (a), a monomer of formula (b), a monomer of formula (d), and a monomer of formula (e), and a monomer of formula (m).

Preferably, the monomer mixture comprises or essentially consists of the monomer of formula (a), a monomer of formula (b), a monomer of formula (d), and a monomer of formula (e), and a monomer of formula (k).

Preferably, the monomer mixture comprises or essentially consists of the monomer of formula (a), a monomer of formula (b), a monomer of formula (d), and a monomer of formula (e), a monomer of formula (h), and a monomer of formula (k).

Preferably, the monomer mixture comprises or essentially consists of the monomer of formula (a), a monomer of formula (b), a monomer of formula (d), and a monomer of formula (e), a monomer of formula (h), and a monomer of formula (m).

Preferably, the monomer mixture comprises or essentially consists of the monomer of formula (a), a monomer of formula (b), a monomer of formula (d), and a monomer of formula (e), a monomer of formula (h), a monomer of formula (k), and a monomer of formula (m).

Preferably, the monomer mixture comprises or essentially consists of monomers wherein in each case R means -CH₃.

The two-component system according to the invention preferably does not contain methyl acrylate, or when the two-component system contains methyl acrylate, its content is at most 5.0 wt.-%, relative to the total weight of the two-component system.

The two-component system according to the invention preferably does not contain methyl methacrylate, or when the two-component system contains methyl methacrylate, its content is at most 5.0 wt.-%, relative to the total weight of the two-component system.

The two-component system according to the invention preferably does not contain tetrahydrofurfuryl methacrylate, or when the two-component system contains tetrahydrofurfuryl methacrylate, its content is at most 0.3 wt.-%, relative to the total weight of the two-component system.

The two-component system according to the invention preferably does not contain phenoxyethyl methacrylate, or when the two-component system contains phenoxyethyl methacrylate, its content is at most 3.0 wt.-%, relative to the total weight of the two-component system.

The two-component system according to the invention preferably does not contain glycerol formal methacrylate, or when the two-component system contains glycerol formal methacrylate, its content is at most 3.0 wt.-%, relative to the total weight of the two-component system.

The two-component system according to the invention preferably does not contain a substance, which is classified as carcinogenic, mutagenic, or toxic for reproduction (CMR-substance), or when the two-component system contains a CMR-substance. its content is at most 5 wt.-%, relative to the total weight of the two-component system.

The two-component system according to the invention preferably does not contain a substance, which is classified as toxic, or when the two-component system contains a toxic substance, its content is at most 10 wt.-%, relative to the total weight of the two-component system. For the purpose of the specification, the classification of substances as toxic is in accordance with the globally harmonized system of classification and labelling of chemicals (GHS), preferably the version that is valid in 2020.

Preferably, the polymerization initiator is a peroxide polymerization initiator; preferably selected from the group consisting of benzoyl peroxide, tert-butyl hydroperoxide, ditert-butyl peroxide, cumene hydroperoxide, dicumene peroxide, tert-butyl peracetate, tert-butyl perbenzoate, and ditert-butyl perphthalate; preferably benzoyl peroxide.

Preferably, the content of the peroxide polymerization initiator is within the range of 3.5±3.4 wt.-%, more preferably 3.5±3.0 wt.-%, still more preferably 3.5±2.5 wt.-%, yet more preferably 3.5±2.0 wt.-%, even more preferably 3.5±1.5 wt.-%, most preferably 3.5±1.0 wt.-%, and in particular 3.5±0.5 wt.-%, in each case relative to the total weight of the two-component system. When the two-component system comprises more than a peroxide polymerization initiator, the specified content of peroxide polymerization initiator refers to the overall content of all peroxide polymerization initiators that are contained in the two-component system.

Preferably, the polymerization initiator is a redox initiator, wherein an oxidizing agent and a reducing agent are combined; the oxidizing agent preferably is selected from the group consisting of persulfates such as potassium persulfate, sodium persulfate, and ammonium persulfate, hydrogen peroxide, tert-butyl hydroperoxide, tert-butyl peroxymaleic acid, succinic peroxide, benzoyl peroxide, cumene hydroperoxide, diisopropyl peroxydicarbonate, cumyl peroxyneodecanoate, cumyl peroxy octanoate, diisopropylbenzene hydroperoxide, and p-menthane hydroperoxide; the reducing agent is selected from the group consisting of acidic sodium sulfite, sodium dithionite, sodium thiosulfate, rongalite, ascorbic acid, fructose and other reducing saccharides, ferrous sulfate, ferric sulfate and other iron salts.

Preferably, the content of the redox polymerization initiator is within the range of 3.5±3.4 wt.-%, more preferably 3.5±3.0 wt.-%, still more preferably 3.5±2.5 wt.-%, yet more preferably 3.5±2.0 wt.-%, even more preferably 3.5±1.5 wt.-%, most preferably 3.5±1.0 wt.-%, and in particular 3.5±0.5 wt.-%, in each case relative to the total weight of the two-component system. When the two-component system comprises more than a redox polymerization initiator, the specified content of redox polymerization initiator refers to the overall content of all redox polymerization initiators that are contained in the two-component system.

The two-component system according to the invention is preferably curable at room temperature, i.e. spontaneously starts curing once the first component and the second component have been mixed with one another. Nonetheless, it is also contemplated that curing may be accelerated by subjecting the mixture to elevated temperature.

Preferably, the first component and/or the second component additionally comprise at least one, preferably at least two, more preferably at least three and most preferably all four of
- a first toughening agent;
- a second toughening agent differing from the first toughening agent;
- a first impact modifier; and
- a second impact modifier differing from the first impact modifier.

Preferably, the two-component system according to the invention comprises a first toughening agent and optionally and preferably, a second toughening agent that differs from the first toughening agent.

For the purpose of the specification, a toughening agent increases the ability of the acrylate structural adhesive to absorb energy and plastically deform without fracture. Typical toughening agents are rubbers (elastomers) that can be interspersed as nanoparticles within a polymer matrix to increase the mechanical robustness, or toughness, of the material. Toughening agents are known to the skilled person (see e.g. Bucknall C.B. (1977) Toughened Plastics, Springer; Keskkula H., Paul D.R. (1994) Toughening agents for engineering polymers. In: Collyer A.A. (eds) Rubber Toughened Engineering Plastics. Springer; Arends Ch. (1996) Polymer Toughening, Marcel Dekker).

Elastomers and polymers employed as toughening agents may have a glass transition temperature (T_{g}) of less than -25 °C, and advantageously less than -50 °C. Further, these toughening agents may beneficially be soluble in the acrylic monomers described above. In general, the elastomers may include synthetic high polymers. Moreover, the elastomers may be supplied commercially as adhesive grades. Elastomers and polymers may include polychloroprene (neoprene) and block-copolymers of butadiene or isoprene with styrene, acrylonitrile, acrylates, methacrylates, and the like.

Preferably, the first toughening agent is a liquid toughening agent; preferably selected from aliphatic and aromatic urethane (meth)acrylate, epoxy (meth)acrylate, polyester (meth)acrylate, (meth)acrylate terminated butadiene-acrylonitrile copolymers, (meth)acrylate (vinyl) terminated butadiene-acrylonitrile copolymers (commercially available e.g. as Hypro^{™} 2000X168LC VTB) and, (meth)acrylate-terminated poly(butadiene-acrylonitrile-acrylic acid) terpolymers; preferably a (meth)acrylate terminated butadiene-acrylonitrile copolymer. Preferably, the butadiene acrylonitrile backbone is a random copolymer backbone with a content of more than 50 wt.-% butadiene, more preferably at least 60 wt.-%, still more preferably at least 70 wt.-%, and in particular at least 80 wt.-%, the remainder being acrylonitrile. First toughening agents of this type are commercially available (e.g. Hypro^{™} 1300X33LC VTBNX, Hypro^{™} 1300X43VTBNX).

Preferably, the content of the first toughening agent is within the range of 20±15 wt.-%, relative to the total weight of the first component; preferably 15±10 wt.-%, more preferably 15±8.0 wt.-%, still more preferably 15±6.0 wt.-%, yet more preferably 15±4.0 wt.-%, even more preferably 15±2.0 wt.-%, most preferably 10±8.0 wt.-%, and in particular 10±4.0 wt.-%.

Preferably, the second toughening agent is a solid toughening agent; preferably selected from the group consisting of styrene-butadiene-styrene block-copolymers (SBS), styrene-isoprene-styrene block-copolymers (SIS), styrene-ethylene-propylene block-copolymers (SEP), styrene-ethylene-butadiene-styrene block-copolymers (SEBS), ethylene-propylene rubbers (EPR), acrylonitrile-butadiene rubbers (NBR), ethylene-propylene-diene rubbers (EPDM), butadiene rubbers (BR), natural rubbers (NR), styrene-butadiene rubbers (SBR), thermoplastic polyolefin elastomers (POE), ethylene acrylic acid copolymers (EAA), ethylene-vinyl acetate or a mixture of several ethylene copolymers (EVA); preferably a styrene-butadiene-styrene block-copolymer (SBS). Second toughening agents of this type are commercially available (e.g. Kraton^{™} D1102, Kraton^{™} D1116, Kraton^{™} D1118, Kraton^{™} D1133, Kraton^{™} D1152 ESM, Kraton^{™} D1153, Kraton^{™} D1155, Kraton^{™} D1192).

Preferred second toughening agents include copolymers (e.g., block-copolymers) having a glass transition temperature, Tg, of at least one domain in the range of in the range of -50 °C to -110 °C. Embodiments of these toughening agents include styrene-butadiene-styrene (SBS) copolymers. Commercial examples of SBS copolymers are Kraton^{™} D1116, Kraton D1152 ESM and Kratone^{™} 1184 (KRATON ).

Preferably, the content of the second toughening agent is within the range of 7.0±5.0 wt.-%, relative to the total weight of the first component; preferably 7.0±4.0 wt.-%, more preferably 7.0±3.0 wt.-%, still more preferably 7.0±2.0 wt.-%, and most preferably 7.0±1.0 wt.-%.

The two-component system according to the invention preferably does not contain a chlorinated toughening agent, or when the two-component system contains a chlorinated toughening agent, its content is at most 5.0 wt.-%, relative to the total weight of the two-component system.

Preferably, the chlorinated toughening agent is a chlorosulphonated polyethylene or a chlorinated polyethylene.

Preferably, the two-component system according to the invention comprises a first impact modifier and optionally and preferably, a second impact modifier that differs from the first impact modifier.

For the purpose of the specification, an impact modifier increases the durability of the acrylate structural adhesive. Impact modifiers are known to the skilled person (see e.g. Berzins A.P. Impact Modifiers, Chapter 8 in Lutz J.T., Grossmann R.F. Polymer Modifiers and Adhesives (2001), Marcel Dekker).

The acrylate structural adhesives formulated with impact modifiers exhibit desirable properties for many adhesive applications. For example, impact modifiers have a similar effect on the cured adhesives as toughening agents in reducing brittleness and increasing impact strength of the cured adhesives. The impact modifiers may also provide improved non-sag and thixotropic properties, and anti-sliding performance in the uncured adhesives.

The impact modifiers according to the invention generally include graft copolymers that may be characterized as core-shell copolymers having a rubbery "core," a hard "shell," and that swell in the methacrylate and/or acrylate monomer compositions but do not dissolve therein. Examples of core-shell copolymers are those where the hard "shell" monomers, such as styrene, acrylonitrile, or methyl methacrylate, are grafted onto a rubbery "core" made from polymers of butadiene, butyl acrylate, ethyl acrylate, isoprene and the like. One type of core-shell polymers is methacrylate butadiene styrene (MBS) copolymer made by polymerizing methyl methacrylate in the presence of polybutadiene or a polybutadiene copolymer rubber. Commercial examples of core shell impact modifiers are Paraloid^{™} BTA-753, Paraloid 2650A, Paraloid 2691A, Clearstrength^{®} E920, Clearstrength XT 100, and Kane Ace^{™} B-564 or Kane Ace^{™} M521.

The first toughening agent, the second toughening agent, the first impact modifier and the second impact modifier differ from one another.

Preferably, the first impact modifier is a first core shell impact modifier. Preferably, the first impact modifier is selected from impact modifiers based on butadiene, isoprene, ethylene-propylene and ethylene-butylene in combination with styrene, acrylonitrile and acrylic monomers; acrylonitrile butadiene styrene (ABS) impact modifiers; methacrylate butadiene styrene (MBS) impact modifiers; and MABS impact modifiers. In a preferred embodiment, the first impact modifier is a (methyl)methacrylate butadiene styrene (MBS) core shell impact modifier. Thus, the first impact modifier preferably is a core-shell copolymer where hard "shell" acrylate monomers (preferably (methyl)methacrylates) are grafted onto a rubbery "core" made from butadiene styrene rubber. First impact modifiers of this type are commercially available (e.g. Kane Ace^{™} B564, Kane Ace^{™} M521, Clearstrength^{™} XT 100, Paraloid 2650A, Paraloid 2691A, Clearstrength^{®} E920, Clearstrength XT 100). In another preferred embodiment, the first impact modifier is a core shell polybutadiene rubber, which may be dispersed in liquid bisphenol A epoxy resin (e.g. Kane Ace^{™} MX257).

Preferably, the content of the first impact modifier is within the range of 25±20 wt.-%, relative to the total weight of the first component; preferably 25±15 wt.-%, more preferably 25±10 wt.-%, and most preferably 25±4.0 wt.-%.

Preferably, the second impact modifier is a second core shell impact modifier; preferably a core shell impact modifier having an all-acrylic core shell based on butyl-acrylate rubber. Thus, the second impact modifier preferably is a core-shell copolymer where hard "shell" acrylate monomers (preferably (methyl)methacrylates) are grafted onto a rubbery "core" made from butyl acrylate rubber. First impact modifiers of this type are commercially available (e.g. ParaloidTM EXL-2300G, Paraloid EXL-2314, Paraloid EXL 3361).

Preferably, the content of the second impact modifier is within the range of 5.0±4.0 wt.-%, relative to the total weight of the first component.

Preferably, the total content of the first impact modifier and the second impact modifier is at least 10 wt.-%, relative to the total weight of the first component; preferably at least 15 wt.-%, and more preferably at least 20 wt.-%.

Preferably, total content of the first impact modifier and the second impact modifier is at least 25 wt.-%, relative to the total weight of the first component.

Preferably, the first component additionally comprises an accelerator; preferably a metal di(meth)acrylate; more preferably a metal di(meth)acrylate selected from zinc di(meth)acrylate, aluminum di(meth)acrylate and magnesium di(meth)acrylate; most preferably zinc dimethacrylate.

Further accelerators include but are not limited to organic transitional metal compounds, such as copper acetyl acetonate, vanadium acetyl acetonate, and the like. In general, the accelerators may be organic salts of a transition metal, such as cobalt, nickel, manganese or iron naphthenate, copper octoate, copper acetylacetonate, iron hexoate, iron propionate, and the like. Accelerators are commercially available (e.g. Dymalink^{™} 708, Dymalink^{™} 709).

Preferably, the content of the accelerator is within the range of 1.0±0.8 wt.-%, relative to the total weight of the first component; preferably within the range of 1.0±0.6 wt.-%, more preferably 1.0±0.4 wt.-%, and most preferably 1.0±0.3 wt.-%.

Preferably, the first component additionally comprises a curative (curing accelerator); preferably a curative selected from N,N-dimethyl-para-toluidine (DMPT), N-(2-hydroxyethyl)-N-methyl-para-toluidine (MHPT), N-methyl-N-(2-hydroxypropyl)-p-toluidine (2HPMT), and N-ethyl-N-(2-hydroxyethyl)-p-toluidine (EHPT); more preferably N-(2-hydroxyethyl)-N-methyl-para-toluidine. Curatives are commercially available (e.g. Firstcure^{™} MHPT).

Preferably, the content of the curative is within the range of 1.5±1.4 wt.-%, relative to the total weight of the first component; preferably within the range of 1.5±1.2 wt.-%, more preferably within the range of 1.5±1.0 wt.-%.

Preferably, the first component and/or the second component additionally comprises a stabilizer; preferably a stabilizer selected from the group consisting of phenols, quinones, hydroquinones, thiazines, phenothiazines, N-oxyls, aromatic amines, phenylenediamines, sulfonamides, oximes, hydroxylamines, urea derivatives, phosphorus compounds, sulfur compounds and metal salts; more preferably mono-tert-butyl hydroquinone (MTBHQ) and/or 10H-phenothiazine.

Such stabilizers are normally used to prevent premature polymerization and curing and to help the radical polymerization initiator to provide for a desired and consistent cure profile, and thus a consistent working time. Further examples include but are not limited to combinations of butylated hydroxytoluene (BHT or 2,6-di-tert-butyl-p-cresol) and quinone(s), which commonly may be employed for medium and long open time adhesives. A specific example of an inhibitor/retardant system is a combination of butylated hydroxytoluene (BHT) and hydroquinone (HQ).

Preferably, the content of the stabilizer is within the range of 0.025±0.015 wt.-%, relative to the total weight of the first component; preferably within the range of 0.025±0.01 wt.-%, and more preferably within the range of 0.025±0.005.

Preferably, the first component and/or the second component additionally comprises a filler; preferably an inorganic filler; more preferably a filler selected from kaolin, silica, talc, calcium carbonate, carbon black, titanium oxides, and the pigments used to color material; most preferably silica.

In a preferred embodiment of the invention, the viscosity of the first component and/or the second component is controlled by adjusting type and amount of first impact modifier and optionally, second modifier. According to this embodiment, the nature and amount of filler preferably does not or not significantly contribute to the viscosity of the first component and/or the second component. According to this embodiment, the filler essentially may serve the purposes of reducing costs, providing color (pigment), improving reinforcement (e.g. fibers), and the like.

In another preferred embodiment of the invention, the viscosity of the first component and/or the second component is controlled by adjusting type and amount of filler. According to this embodiment, thixotropic fillers are preferred.

Preferably, the content of the filler is within the range of 5.0±4.8 wt.-%, relative to the total weight of the first component.

Preferably, the first component and/or the second component additionally comprises a polymer; preferably an epoxy resin.

Preferably, the second component additionally comprises a polymer and the content of said polymer is within the range of 10±2.5 wt.-%, relative to the total weight of the second component; preferably 9.0±2.5 wt.-%, more preferably 8.0±2.5 wt.-%, still more preferably 7.0±2.5 wt.-%, yet more preferably 6.0±2.5 wt.-%, even more preferably 5.0±2.5 wt.-%, most preferably 4.0±2.5 wt.-%, and in particular 3.0±2.5 wt.-%.

Preferably, the content of the polymer is within the range of 10±2.5 wt.-%, relative to the total weight of the two-component system; preferably 9.0±2.5 wt.-%, more preferably 8.0±2.5 wt.-%, still more preferably 7.0±2.5 wt.-%, yet more preferably 6.0±2.5 wt.-%, even more preferably 5.0±2.5 wt.-%, most preferably 4.0±2.5 wt.-%, and in particular 3.0±2.5 wt.-%.

It has been found that the epoxy resin inter alia increases T_{g} of the acrylate structural adhesive.

Preferably, the epoxy resin comprises epoxy functional groups that are capable of reacting e.g. with the carboxylic acid functional groups of the (meth)acrylic acid. In order to avoid premature reaction, the epoxy resin is preferably contained in the second component, i.e. spatially separate from the (meth)acrylic acid that is contained in the first component

Exemplary epoxy resins include but are not limited to phenolic resins, which may be a novolac type or other type resin. Other preferred epoxy resins include bisphenol-A epichlorohydrin ether polymer, or a bisphenol-A epoxy resin which may be modified with butadiene or another polymeric additive, or bisphenol-F-type epoxy resins. Moreover, various mixtures of several different epoxy resins may be employed as well. Examples of suitable epoxy resins are sold under the tradename DER330, DER331, AralditeTM GY 250, AralditeTM GY 260, AralditeTM GY 282, AralditeTM GY 281, AralditeTM GY 285, YD128, EpikoteTM 828, DER 354, EpikoteTM 862, EpikoteTM 864, EpikoteTM 869.

Preferably, the first component of the two-component system according to the invention additionally comprises a cure indicator; preferably a triphenylmethane derivative, e.g. bis(dimethyla-mino)triphenylmethane or tris(dimethylamino)triphenylmethane. Cure indicators change their color during the polymerization and curing reaction thereby visually indicating the progress of polymerization and curing. Suitable cure indicators are disclosed in e.g. WO 98/34980 and US 20 3/292054.

Preferably, the content of the cure indicator is at most 0.10 wt.-%, more preferably at most 0.09 wt.-%, still more preferably at most 0.08 wt.-%, yet more preferably at most 0.07 wt.-%, even more preferably at most 0.06 wt.-%, most preferably at most 0.05 wt.-%, in each case relative to the total weight of the two-component system. Preferably, the cure indicator is contained at a concentration that is so low that the cure indicator as such has no influence of the progress of the polymerization and curing reaction.

Preferably, the relative weight and/or volume ratio of the first component to the second component is within the range of from 20:1 to 1:1, preferably 15:1 to 1:1, and more preferably 10: 1 to 1:1.

A skilled person recognizes that other relative weight ratios can easily be realized and thus are also contemplated.

Conventional methods for preparing two-component systems with a first component that is spatially separated from a second component in order to prevent premature reaction are known to the skilled person. Certain ingredients, such as the toughening agents and impact modifiers may be apportioned between the first component and the second component to provide for a similar viscosity of the first component and the second component. As indicated, the volume ratio and/or weight ratio between the first component and the second component can vary greatly, for example, from 20:1 to 1:1. In some embodiments, the ratio between the first component and the second component is 10:1 by volume or weight.

The two-component system according to the invention preferably is odorless.

The two-component system according to the invention preferably is nonflammable.

The two-component system according to the invention preferably is non expandable

The two-component system according to the invention preferably provides gap filling of up to 100 mm without boiling, preferably at open times within the range of only 4 to 6 minutes. Gap filling is preferably determined in accordance with ASTM method D3931 - 08(2015).

The two-component system according to the invention preferably provides an elongation at break
- of at least 40%, preferably at a Young's modulus of at least 400 MPa, preferably at least 500 MPa, more preferably of at least 600 MPa, and most preferably of at least 700 MPa;
- of at least 50%, preferably at a Young's modulus of at least 400 MPa, preferably at least 500 MPa, more preferably of at least 600 MPa, and most preferably of at least 700 MPa;
- of at least 70%, preferably at a Young's modulus of at least 400 MPa, preferably at least 500 MPa, more preferably of at least 600 MPa, and most preferably of at least 700 MPa;
- of at least 75%, preferably at a Young's modulus of at least 400 MPa, preferably at least 500 MPa, more preferably of at least 600 MPa, and most preferably of at least 700 MPa;
- within the range of 5% to 50%, preferably at a Young's modulus of at least 800 MPa, more preferably of at least 900 MPa, and most preferably of at least 1 GPa; or
- within the range of 10% to 40%, preferably at a Young's modulus of at least 800 MPa, more preferably of at least 900 MPa, and most preferably of at least 1 GPa;
Young's modulus and elongation at break are preferably determined in accordance with ASTM method D638 - 14.

The two-component system according to the invention preferably provides a tensile strength of at least 5.0 MPa, preferably at least 7.5 MPa, more preferably at least 10 MPa, still more preferably at least 12.5 MPa, and yet more preferably at least 15 MPa. The tensile strength is preferably determined in accordance with EN ISO DIN 53504:2017-03.

The two-component system according to the invention preferably provides a T-peel strength of at least 8 N/mm, preferably at least 9 N/mm, more preferably at least 10 N/mm and most preferably at least 11 N/mm. The T-peel strength is preferably determined in accordance with ASTM method D1876 - 08(2015)e1.

The two-component system according to the invention preferably provides a lap shear strength of at least 10 MPa, preferably at least 15 MPa (10 MPa), wherein the lap shear strength is preferably determined in accordance with ASTM method D1002 - 10(2019).

The two-component system according to the invention preferably exhibits a shrinkage determined using a rheometer or a pycnometer of not more than 18 vol.-%, preferably not more than 17 vol.-%, more preferably not more than 16 vol.-%, still more preferably not more than 15 vol.-%, yet more preferably not more than 14 vol.-%, even more preferably not more than 13 vol.-%, most preferably not more than 12 vol.-%, and in particular not more than 10 vol.-%.

Conventional methods for the determination of shrinkage using a rheometer (e.g. TA Instruments AR/DHR and ARES-G2) or a pycnometer (e.g. Micromeritics AccuPyc^{®} II 1340) are known to the skilled person.

It should be noted that the order of addition in making the first component and the second component can vary greatly. Moreover, the commercial preparation of the first component and the second component may also involve making stock or premix solutions, cooling the formulations at intermediate and final steps, degassing the formulations under a vacuum, and the like. As appreciated by a skilled person, equipment that may be employed in making the first component and the second component include vessels, piping, valves, transfer pumps, vacuum pumps, mixers (e.g., high speed agitators or dispersers), and so forth. The first component and the second component may be delivered to the end-user in differing types of containers, ranging from small cartridges to drums, and the like.

After preparation of the first component and the second component of the two-component system according to the invention, the two components may be stored in inventory by the manufacturer, the distributor, end-user, and the like. The first component and the second component may alternatively be used or applied soon after transport (without intermediate storage) to bond substrates. However, it is common for either the manufacturer or the user to store the first component and the second component prior to combination and use of the two components. Thus, it is generally beneficial to have a consistent cure profile over the shelf life of the first component and the second component. Again, it is generally desirable for the user to know the behavior of the cure profile (e.g., peak exotherm temperature and time) to appropriately manage the application of the two-component system and the construction/bonding of the structural components, pieces, parts, and the like. Therefore, ingredients, such as cure profile regulators, cure accelerators, and stabilizers are added to the two-component system to provide for a more consistent cure profile. These ingredients may be added to the first component, to the second component, or to both.

To apply the adhesive, the first component and the second component are combined or mixed together, (e.g., through a static mixer). The combined first component and the second component may then be applied to a first substrate and/or a second substrate. After such application, the first substrate and the second substrate may be adhered to one another via the applied acrylate structural adhesive, i.e. via the combined first component and the second component. Lastly, the adhesive is allowed to cure, typically at ambient or room temperature.

The open time (working time) is generally regarded as the time allowable between when the two-component system is mixed/applied to parts and parts must be assembled (mated). This amount of time is determined by the cure rate of the two-component system and is, therefore, also dependent on temperature and the mass of the two-component system. For the purpose of the specification, open time is the time span which may elapse after the first component and the second component have been mixed with one another and immediately thereafter have been applied to substrates, but before the substrates are assembled, which still provides essentially equivalent bond strength after assembling of substrates and complete curing of the adhesive. Open time is determined in a comparative experiment comparing bond strengths with one another. In the reference experiment, the first component and the second component are mixed with one another, immediately thereafter the mixture is applied to substrates, and immediately thereafter the substrates are assembled. The adhesive is allowed to fully cure and the thus achieved bond strength is the reference bond strength. In a series of test experiments, the first component and the second component are mixed with one another, immediately thereafter the mixture is applied to substrates, but before the substrates are assembled, in each case a predetermined time span elapses. After the substrates have been assembled, the adhesive is again allowed to fully cure and the thus achieved bond strengths are the test bond strengths. When a given test bond strength is essentially equivalent compared to the reference bond strength, the corresponding elapsed time span is within the open time. When a given test bond strength is not essentially equivalent compared to the reference bond strength, the corresponding elapsed time span is outside the open time.

For the purpose of the specification, the open time is defined as the maximum time span that may elapse thereby still delivering essentially equivalent bond strength as the reference bond strength, i.e. as if the substrates were immediately assembled upon initial application of the mixed two components. In this context "essentially equivalent" bond strength is commonly understood to be within 10% of the bond strength achieved with immediate assembling of the substrates. Further, bond strength is commonly expressed in terms of lap shear strength reported as the failure stress in the adhesive, which is calculated by dividing the failing load by the bond area. Preferably, the lap shear strength is determined according to ASTM method D1002 - 10(2019).

Preferably, open time is measured through the Delayed Mating Open Time (DMOT) test. In this test, adhesive is applied to a series of 2.54 cm (1") x 10.16 cm (4") aluminum coupons as quickly as possible, then coupons are assembled (mated) with a delay of successively longer intervals of time, with 1.27 cm (0.5") overlap between the two coupons and a 254 µm (10 mil) bond line thickness. The adhesive is then allowed to cure completely (typically overnight), and the coupons are pulled apart in shear. The results of lap shear strength (LSS) and failure mode (adhesive vs. cohesive) are compared for each coupon to one assembled with effectively zero delay, and the end of the open Time is then judged by a reduction in strength of > 10% of the original and/or reduction in cohesive failure to <80% (>20% adhesive failure).

The two-component system according to the invention preferably provides an open time within the range of 1 to 90 minutes.

In preferred embodiments, the two-component system according to the invention provides an open time within the range of 10±5 minutes, or 15±10 minutes, or 15±5 minutes, or 20±15 minutes, or 20±10 minutes, or 20±5 minutes, or 25±20 minutes, or 25±15 minutes, or 25±10 minutes, or 25±5 minutes, or 30±25 minutes, or 30±20 minutes, or 30±15 minutes, or 30±10 minutes, or 30±5 minutes, or 35±30 minutes, or 35±25 minutes, or 35±20 minutes, or 35±15 minutes, or 35±10 minutes, or 35±5 minutes, or 40±35 minutes, or 40±30 minutes, or 40±25 minutes, or 40±20 minutes, or 40±15 minutes, or 40±10 minutes, or 40±5 minutes, or 45±40 minutes, or 45±35 minutes, or 45±30 minutes, or 45±25 minutes, or 45±20 minutes, or 45±15 minutes, or 45±10 minutes, or 45±5 minutes, or 50±40 minutes, or 50±35 minutes, or 50±30 minutes, or 50±25 minutes, or 50±20 minutes, or 50±15 minutes, or 50±10 minutes, or 50±5 minutes, or 55±35 minutes, or 55±30 minutes, or 55±25 minutes, or 55±20 minutes, or 55±15 minutes, or 55±10 minutes, or 55±5 minutes, or 60±30 minutes, or 60±25 minutes, or 60±20 minutes, or 60±15 minutes, or 60±10 minutes, or 60±5 minutes, or 65±25 minutes, or 65±20 minutes, or 65±15 minutes, or 65±10 minutes, or 65±5 minutes, or 70±20 minutes, or 70±15 minutes, or 70±10 minutes, or 70±5 minutes, or 75±15 minutes, or 75=10 minutes, or 75±5 minutes, or 80±10 minutes, or 80±5 minutes, or 85±5 minutes;
preferably within the range of 5.0±2.5 minutes, or 7.5±5.0 minutes, or 7.5±2.5 minutes, or 10±7.5 minutes, or 10±5.0 minutes, or 10±2.5 minutes, or 12.5±10 minutes, or 12.5±7.5 minutes, or 12.5±5.0 minutes, or 12.5±2.5 minutes.

For the purpose of the specification, the time to handling strength (curing time, fixture time) is defined as the time required after the mixture of the first component and the second component has been applied and assembled for the bond strength to exceed a value of 0.689 MPa (100 psi). A longer open time typically results in a longer time to handling strength. It is generally most desirable to have a time to handling strength that is minimally longer than the open time, sometimes referred to as "snap cure" or "cure on command". Typically, final bond strength after curing is complete is much higher than 0.689 MPa (100 psi), typically greater than 10 MPa.

Preferably, time to handling strength is measured through the Rate of Bond Strength Development (ROBSD) test. In this test, adhesive is applied to a series of 2.54 cm (1") x 10.16 cm (4") aluminum coupons which are then immediately assembled (mated) to a second coupon with 1.27 cm (0.5") overlap and a 254 µm (10 mil) bond line thickness. The coupons are then pulled apart in shear over successively longer intervals of time, evaluating the lap shear strength over time as the adhesive cures and bond strength increases. The time to handling strength is judged by the time that it takes for the bond strength to reach 0.689 MPa (100 psi).

The two-component system according to the invention preferably provides a time to handling strength within the range of 7 to 28 minutes, preferably 8 to 27 minutes, more preferably 8 to 25 minutes, still more preferably 8 to 20 minutes, most preferably 8 to 10 minutes.

Open time and time to handling strength can be purposefully adjusted by varying type and individual amount of adhesion promoter, accelerator, curative, stabilizer, and peroxide polymerization initiator. Thus, adjusting open time and time to handling strength can be achieved by routine experimentation. When the amount/concentration of adhesion promoter is increased, the open time and the time to handling strength are typically extended. When the amount/concentration of accelerator is increased, the time to handling strength is typically shortened. When the amount/concentration of curative is increased, the open time and the time to handling strength are shortened. When the amount/concentration of the stabilizer is increased, the open time and the time to handling are typically extended. The individual effect of the peroxide polymerization initiator depends upon the nature and amount of monomers to be polymerized.

Another aspect of the invention relates to the use of a two-component system according to the invention as described above as acrylate structural adhesive.

Another aspect of the invention relates to a method of bonding two substrates comprising the steps of
(a) mixing the first component as described above and the second component as described above with one another thereby providing a combined first component and the second component;
(b) applying the combined first component and the second component obtained in step (a) to a first substrate and/or a second substrate;
(c) optionally, allowing time to elapse prior to expiry of the open time, e.g. for performing some other action;
(d) adhering the first substrate and the second substrate to one another; and
(e) allowing the combined first component and the second component to cure thereby providing a cured acrylate structural adhesive.

The following examples further illustrate the invention but are not construed as limiting its scope, which is solely defined by the appended claims. Examples 1-6 in table 1 and example 9 in table 2 are not according to the invention.

Two-component systems were manufactured comprising a first component having the following ingredients at the following weight contents. The first component was mixed with a second component comprising a polymerization initiator and the mixture was applied to a substrate.

### Examples 1 to 8:

| first component | | inventive | | | | | | | |
|---|---|---|---|---|---|---|---|---|---|
| ingredient [wt.-%¹] | function | Ex. 1 | Ex. 2 | Ex. 3 | Ex. 4 | Ex. 5 | Ex. 6 | Ex. 7 | Ex. 8 |
| methyl methacrylate | monomer | - | - | - | - | - | - | - | - |
| glycerol formal methacrylate | monomer | 50.05 | 50.00 | 23.76 | 16.67 | 16.24 | 16.90 | 16.07 | 16.67 |
| methacrylic acid | monomer b | 4.60 | 6.00 | 4.56 | 7.65 | 7.45 | 7.75 | 7.37 | 7.65 |
| 2-methacryloyloxyethyl phosphate | monomer e | 3.50 | 7.00 | 3.01 | 3.33 | 3.25 | 3.38 | 3.21 | 3.33 |
| hydroxyethyl methacrylate | monomer a | - | - | 7.77 | 11.76 | 11.46 | 11.93 | 16.07 | 11.76 |
| benzyl methacrylate | monomer d | - | - | - | - | - | - | 16.07 | 16.67 |
| butyl diethylene glycol methacrylate | monomer h | - | - | 13.47 | - | 7.64 | - | - | - |
| cyclohexyl methacrylate | monomer k | - | - | - | 16.67 | 7.64 | 16.90 | - | - |
| substituted cyclohexyl methacrylate | monomer k | - | - | - | - | - | - | - | - |
| isobornyl methacrylate | monomer m | - | - | 5.08 | - | - | - | - | - |
| (meth)acrylate terminated butadiene-acrylonitrile copolymer | first toughening agent | 8.01 | 10.00 | 10.36 | 11.18 | 10.89 | 11.33 | 10.78 | 11.18 |
| styrene-butadiene-styrene block-copolymer | second toughening agent | 7.01 | - | - | - | 4.78 | - | - | - |
| methacrylate butadiene styrene copolymer | first impact modifier | 23.42 | 23.40 | 25.91 | 28.51 | 27.77 | 28.91 | 26.99 | 28.51 |
| all-acrylic core shell based on butyl-acrylate rubber | second impact modifier | - | - | 3.83 | - | - | - | - | - |
| Zn dimethacrylate | accelerator | - | - | 1.19 | - | - | - | - | - |
| fumed silica | inorganic filler | - | - | - | 1.96 | 0.96 | 0.99 | - | 1.96 |
| anhydrous silicate | inorganic filler | 2.30 | 2.60 | - | - | - | - | 1.23 | - |
| toluidine derivative | curative | 1.00 | 1.00 | 1.04 | 2.25 | 1.91 | 1.89 | 2.19 | 2.25 |
| hydroquinone derivative | stabilizer | - | - | 0.02 | 0.02 | 0.02 | 0.02 | 0.03 | 0.02 |
| TOTAL | | 100.00 | 100.00 | 100.00 | 100.00 | 100.00 | 100.00 | 100.00 | 100.00 |

| | | | | | | | | | |
|---|---|---|---|---|---|---|---|---|---|
| ¹relative to the total weight of the first component | | | | | | | | | |

### Examples 9 to 17:

| first component | | inventive | | | | | | | | |
|---|---|---|---|---|---|---|---|---|---|---|
| ingredient [wt.-%²] | function | Ex. 9 | Ex. 10 | Ex. 11 | Ex. 12 | Ex. 13 | Ex. 14 | Ex. 15 | Ex. 16 | Ex. 17 |
| methyl methacrylate | monomer | - | - | - | - | - | - | - | - | - |
| glycerol formal methacrylate | monomer | - | - | - | - | - | - | - | - | - |
| methacrylic acid | monomer b | 7.80 | 4.79 | 4.47 | 4.50 | 7.80 | 7.72 | 9.90 | 7.68 | 7.68 |
| 2-methacryloyloxyethyl phosphate | monomer e | 3.40 | 3.15 | 2.95 | 3.40 | 3.40 | 4.36 | 3.37 | 3.35 | 3.35 |
| hydroxyethyl methacrylate | monomer a | 16.00 | 8.16 | 12.71 | 17.00 | 15.00 | 15.84 | 15.84 | 15.76 | 15.76 |
| benzyl methacrylate | monomer d | - | 21.76 | 16.2 | 17.00 | 13.00 | 7.92 | 12.87 | 7.88 | 7.88 |
| butyl diethylene glycol methacrylate | monomer h | 13.80 | 13.05 | 7.12 | - | 3.30 | 3.27 | 3.27 | 8.18 | 8.18 |
| cyclohexyl methacrylate | monomer k | - | - | 10.68 | 17.00 | 13.00 | 17.82 | 12.87 | 7.88 | - |
| substituted cyclohexyl methacrylate | monomer k | - | - | - | - | - | - | - | - | 7.88 |
| isobornyl methacrylate | monomer m | 15.00 | 5.33 | 4.98 | - | - | - | - | 5.91 | 5.91 |
| (meth)acrylate terminated butadiene-acrylonitrile copolymer | first toughening agent | 11.40 | 10.88 | 10.17 | 11.40 | 11.40 | 11.29 | 11.29 | 11.23 | 11.23 |
| styrene-butadiene-styrene block-copolymer | second toughening agent | - | - | - | - | - | - | - | - | - |
| methacrylate butadiene styrene copolymer | first impact modifier | 29.08 | 27.2 | 25.42 | 28.55 | 29.08 | 28.79 | 27.60 | 28.65 | 28.65 |
| all-acrylic core shell based on butyl-acrylate rubber | second impact modifier | - | 4.03 | 3.76 | - | - | - | - | - | - |
| Zn dimethacrylate | accelerator | - | 1.09 | 1.02 | - | - | - | - | - | - |
| fumed silica | inorganic filler | 1.50 | - | - | - | 2.00 | 0.99 | 0.99 | 1.48 | 1.48 |
| anhydrous silicate | inorganic filler | - | - | - | - | - | - | - | - | - |
| toluidine derivative | curative | 2.00 | 0.54 | 0.51 | 1.15 | 2.00 | 1.98 | 1.98 | 1.97 | 1.97 |
| hydroquinone derivative | stabilizer | 0.02 | 0.02 | 0.02 | 0.02 | 0.02 | 0.02 | 0.02 | 0.02 | 0.02 |
| TOTAL | | 100.00 | 100.00 | 100.00 | 100.00 | 100.00 | 100.00 | 100.00 | 100.00 | 100.00 |

| | | | | | | | | | | |
|---|---|---|---|---|---|---|---|---|---|---|
| ²relative to the total weight of the first component | | | | | | | | | | |

### Examples 18 to 29:

| first component | | comparative | | | | | | | | | | | |
|---|---|---|---|---|---|---|---|---|---|---|---|---|---|
| ingredient [wt.-%³] | function | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 |
| methyl methacrylate | monomer | 25.05 | 32.00 | 29.98 | 30.03 | 30.23 | 30.82 | 32.67 | 35.10 | 32.91 | 32.87 | 33.99 | 32.57 |
| glycerol formal methacrylate | monomer | 25.05 | - | - | - | - | - | - | - | - | - | - | - |
| methacrylic acid | monomer b | 4.61 | 4.40 | 4.40 | 4.40 | 4.74 | 4.84 | 5.13 | 5.46 | 7.73 | 7.72 | 7.98 | 7.65 |
| phosphate methacrylate | monomer e | 3.51 | 2.90 | 2.90 | 2.90 | 3.13 | 3.19 | 3.38 | 3.04 | 3.12 | 3.11 | 3.22 | 3.09 |
| hydroxyethyl methacrylate | monomer a | - | 12.00 | 11.50 | 11.50 | 12.39 | 12.64 | 13.40 | 16.89 | 20.21 | 20.19 | 15.65 | 15.92 |
| butyl diethylene glycol methacrylate | monomer h | - | - | - | - | - | - | - | - | - | - | - | 5.00 |
| isobornyl methacrylate | monomer m | - | 3.90 | 3.90 | 3.90 | 4.20 | 4.29 | 4.54 | 4.83 | - | - | - | - |
| (meth)acrylate terminated butadiene-acrylonitrile copolymer | first toughening agent | 8.02 | 9.50 | 9.00 | 9.00 | 9.70 | - | 10.48 | - | - | - | - | - |
| styrene-butadiene-styrene block-copolymer | second toughening agent | 7.01 | 7.20 | 7.20 | 7.20 | - | 7.91 | 8.39 | - | - | - | 7.31 | - |
| methacrylate butadiene styrene copolymer | first impact modifier | 23.45 | 22.20 | 25.00 | 25.00 | 26.94 | 27.47 | - | 26.23 | 25.52 | 25.50 | 20.87 | 25.26 |
| all-acrylic core shell based on butyl-acrylate rubber | second impact modifier | - | 3.70 | 3.70 | 3.70 | 3.99 | 4.07 | 16.95 | 3.88 | 6.58 | 6.57 | 6.80 | 6.51 |
| Zn dimethacrylate | accelerator | - | 1.15 | 1.15 | 1.15 | 1.24 | 1.26 | 1.34 | 1.21 | - | 0.61 | 0.63 | 0.60 |
| anhydrous silicate | inorganic filler | 2.30 | - | - | - | - | - | - | - | - | - | - | - |
| toluidine derivative | curative | 1.00 | 1.00 | 1.20 | 1.20 | 1.29 | 1.32 | 1.40 | 1.26 | 1.73 | 1.21 | 1.25 | 1.20 |
| hydroquinone derivative | stabilizer | - | - | 0.02 | 0.02 | 2.16 | 2.20 | 2.33 | 2.10 | 2.22 | 2.22 | 2.30 | 2.20 |
| Leuco violet | cure indicator | - | 0.05 | 0.05 | - | - | - | - | - | - | - | - | - |
| TOTAL | | 100.00 | 100.00 | 100.00 | 100.00 | 100.00 | 100.00 | 100.00 | 100.00 | 100.00 | 100.00 | 100.00 | 100.00 |

| | | | | | | | | | | | | | |
|---|---|---|---|---|---|---|---|---|---|---|---|---|---|
| ³relative to the total weight of the first component | | | | | | | | | | | | | |

### Characterization:

| | Ex. 1 | Ex. 2 | Ex. 3 | Ex. 4 | Ex. 5 | Ex. 9 | Ex. 13 | Ex. 14 | Ex. 16 | Ex. 17 |
|---|---|---|---|---|---|---|---|---|---|---|
| Lap shear Alu abraded - 0.3 mm [MP] | 14.3 | 18.3 | n.a. | n.a. | n.a. | 16.7 100%CF | 7 n.a. | n.a. | 17.6 100%CF | 17.9 100%CF |
| Lap shear Alu abraded - 1 mm [MPa] | n.a. | n.a. | 11.7 100%CF | 15.8 100%SCF | 12.1 100%CF | 13.9 100%CF bending | 14.1 100%CF | 15.5 100%CF | 16.9 100%CF bending | 16.6 100%CF bending |
| Young's modulus E [MPa] | 453 | 716 | 438 | 765 | 455 | 433 | 615 | 788 | 375 | 517 |
| Tensile strength s [MPa] | 11 | 13 | 10.7 | 16.8 | 12.1 | 11.3 | 14.6 | 15.4 | 12.0 | 12.7 |
| Elongation at break [%] | 80 | 20 | 87 | 83.5 | 87.0 | 97.0 | 88.0 | 46.4 | 103.0 | 100.0 |
| Open time [min] | 10 | 45 | <2.0 | 3.5 | 4.0 | 4.0 | 4.0 | 5.0 | 4.0 | 4.5 |
| Exothermic time [min] (10g) | 15 | 83 | 5.0 | 5.7 | 7.0 | 10 | 8.0 | 10.5 | 10 | 9.0 |
| Peak exotherm [°C] | n.a. | n.a. | 105.1 | 106.6 | 105.4 | 92.2 | 102.1 | 108.3 | 93.4 | 99.2 |

| | Ex. 18 | Ex. 20 | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|
| Lap shear Alu abraded - 0.3 mm [MPa] | 18.0 100%CF | 25 100%CF | n.a. | n.a. | n.a. | n.a. | n.a. | 21.1 100%SCF | 20.8 100%SCF | 21.4 100%CF | 19.9 100%SCF |
| Lap shear Alu abraded - 1 mm [MPa] | n.a. | 18.0 55%CF | 15.4 100%CF | 15.7 95%CF | 15.7 100%CF | 15.7 100%CF | 22.1 100%CSF | n.a. | n.a | n.a. | n.a. |
| Young's modulus E [MPa] | 500 | 649 | 700 | 1143 | 1102 | 1181 | 1375 | 1071 | 1265 | 1036 | n.a. |
| Tensile strength s [MPa] | 12 | 17.9 | 17.7 | 20.3 | 20.3 | 20.3 | 26 | 23.1 | 26.2 | 19.4 | n.a. |
| Elongation at break [%] | 88 | 110 | 107 | 62.3 | 19 | 19 | 5 | 6.3 | 10 | 10.6 | n.a. |
| Open time [min] | 18 | 4-6 | 4 | 4 | 2.5 | 2.5 | 8.5 | 18-22 (at 24°C) | 12 (at 27.2°C) | 8 (at 26°C) | 14-15 (at 26°C) |
| Exothermic time [min] (10g) | 33 | n.a. | 10 | 11 | 17 | 17 | 11 | n.a. | n.a. | n.a. | n.a. |
| Peak exotherm [°C] | n.a. | n.a. | 105.5 | 104.5 | 90.1 | 90.1 | 117 | n.a. | n.a. | n.a. | n.a. |

The two-component systems according to the invention show excellent adhesive properties, especially in regard to mechanical strength, open times, time to handling strength, elongation at break, tensile strength, young's modulus, T-peel strength and shear strength.

## Claims

1. A two-component system of
(i) a first component comprising a monomer mixture which comprises or essentially consists of
- a monomer of formula (a) H₂C=CR-C(=O)-O-C₂₋₁₄-alkyl-OH;
- a monomer of formula (b) H₂C=CR-C(=O)-OH; and
- a monomer of formula (d) H₂C=CR-C(=O)-O-C₁₋₆-alkyl-(hetero-)aryl, wherein the (hetero-)aryl moiety is optionally substituted with one, two or three substituents independently of one another selected from -C₁₋₆-alkyl;
and preferably additionally at least one monomer selected from
- another monomer of formula (a) H₂C=CR-C(=O)-O-C₂₋₁₄-alkyl-OH;
- a monomer of formula (c) H₂C=CR-C(=O)-O-C₂₋₁₈-alkyl;
- a monomer of formula (e) H₂C=CR-C(=O)-O-C₂₋₁₄-alkyl-O-P(=O)(OH)₂;
- a monomer of formula (f) H₂C=CR-C(=O)-O-C₂₋₁₄-alkyl-O-C(=O)-C₁₋₆-alkyl-C(=O)-C₁₋₆-alkyl;
- a monomer of formula (g) H₂C=CR-C(=O)-[O-CH₂-CH₂]ₙ-OH, wherein index n is an integer within the range of from 1 to 12;
- a monomer of formula (h) H₂C=CR-C(=O)-[O-CH₂-CH₂]ₙ-O-C₁₋₆-alkyl, wherein index n is an integer within the range of from 1 to 12;
- a monomer of formula (i) H₂C=CR-C(=O)-[O-CH₂-CH(CH₃)]ₙ-OH, wherein index n is an integer within the range of from 1 to 12;
- a monomer of formula (j) H₂C=CR-C(=O)-[O-CH₂-CH(CH₃)]ₙ-O-C₁₋₆-alkyl, wherein index n is an integer within the range of from 1 to 12;
- a monomer of formula (k) H₂C=CR-C(=O)-O-C₂₋₁₄-(hetero-)cycloalkyl, wherein the (hetero-)cycloalkyl moiety is optionally substituted with one, two or three substituents independently of one another selected from -C₁₋₆-alkyl;
- a monomer of formula (l) H₂C=CR-C(=O)-O-C₁₋₆-alkyl-C₂₋₁₄-(hetero-)cycloalkyl, wherein the (hetero-)cycloalkyl moiety is optionally substituted with one, two or three substituents independently of one another selected from -C₁₋₆-alkyl;
- a monomer of formula (m) H₂C=CR-C(=O)-O-C₇₋₁₄-bi- or tri-cycloalkyl, wherein the bi- or tri-cycloalkyl moiety is optionally substituted with one, two or three substituents independently of one another selected from -C₁₋₆-alkyl;
- a monomer of formula (n) H₂C=CR-C(=O)-O-C₁₋₆-alkyl-C₇₋₁₄-bi- or tri-cycloalkyl, wherein the bi- or tri-cycloalkyl moiety is optionally substituted with one, two or three substituents independently of one another selected from -C₁₋₆-alkyl;
- a monomer of formula (o) H₂C=CR-C(=O)-O-(hetero-)aryl, wherein the (hetero-)aryl moiety is optionally substituted with one, two or three substituents independently of one another selected from -C₁₋₆-alkyl;
- a monomer of formula (p) H₂C=CR-C(=O)-O-C₂₋₁₄-alkyl-O-C(=O)-CR=CH₂;
- a monomer of formula (q) H₂C=CR-C(=O)-[O-CH₂-CH₂]ₙ-O-C(=O)-CR=CH₂; wherein index n is an integer within the range of from 1 to 12;
- a monomer of formula (r) H₂C=CR-C(=O)-O-C₇₋₁₄-bi- or tri-cycloalkyl-O-C(=O)-CR=CH₂, wherein the bi- or tri-cycloalkyl moiety is optionally substituted with one, two or three substituents independently of one another selected from -C₁₋₆-alkyl;
- a monomer of formula (s) H₂C=CR-C(=O)-O-C₁₋₆-alkyl-C₇₋₁₄-bi- or tri-cycloalkyl-C₁₋₆-alkyl-O-C(=O)-CR=CH₂, wherein the bi- or tri-cycloalkyl moiety is optionally substituted with one, two or three substituents independently of one another selected from - C₁₋₆-alkyl;
- a monomer of formula (t) H₂C=CR-C(=O)-[O-CH₂-CH₂]ₙ-O-phenyl-CR'R"-phenyl-O-[CH₂-CH₂-O]ₙ-C(=O)-CR=CH₂, wherein R' and R" independently of one another mean -H or -C₁₋₆-alkyl; wherein index n is an integer within the range of from 1 to 16; and
- a monomer of formula (u) [H₂C=CR-C(=O)-O-C₁₋₆-alkyl]₃-C₂₋₁₄-(hetero-)cycloalkyl, wherein the (hetero-)cycloalkyl moiety is optionally substituted with one, two or three substituents =O; wherein in each case R independently of one another means -H or-CH₃; and
(ii) a second component comprising
- a polymerization initiator;
wherein the two-component system comprises not more than 5.0 wt.-% methyl methacrylate, relative to the total weight of the two-component system, or no methyl methacrylate at all;
wherein the first component and the second component are spatially separated from one another; and
wherein the reaction of the first component and the second component after mixing results in a acrylate structural adhesive.

2. The two-component system according to claim 1, wherein the monomer mixture comprises or essentially consists of a monomer of formula (a), a monomer of formula (b), a monomer of formula (d), and a monomer of formula (e).

3. The two-component system according to any of the preceding claims, wherein the two-component system comprises neither methyl acrylate, nor methyl methacrylate, nor tetrahydrofurfuryl methacrylate, nor glycerol formal methacrylate, nor phenoxyethyl methacrylate.

4. The two-component system according to any of the preceding claims, wherein the monomer of formula (a) is selected from the group consisting of hydroxyethyl (meth)acrylate, hydroxypropyl (meth)acrylate, and hydroxybutyl (meth)acrylate; preferably hydroxyethyl acrylate, hydroxyethyl methacrylate, hydroxypropyl acrylate, or hydroxypropyl methacrylate.

5. The two-component system according to any of the preceding claims, wherein the monomer of formula (b) is (meth)acrylic acid; preferably methacrylic acid.

6. The two-component system according to any of the preceding claims, wherein the monomer of formula (d) is selected from the group consisting of benzyl (meth)acrylate, 2-phenylethyl (meth)acrylate, 3-phenylpropyl (meth)acrylate, and furfuryl (meth)acrylate; preferably benzyl acrylate or benzyl methacrylate.

7. The two-component system according to any of the preceding claims, wherein the monomer of formula (e) is selected from the group consisting of 2-(meth)acryloyloxyethyl phosphate, 4-(meth)acryloyloxybutyl phosphate, and 10-(meth)acryloyloxydecyl phosphate; preferably 2-acryloyloxyethyl phosphate or 2-methacryloyloxyethyl phosphate.

8. The two-component system according to any of the preceding claims, wherein the monomer mixture comprises or essentially consists of the monomer of formula (a), a monomer of formula (b), a monomer of formula (d), and a monomer of formula (e), and a monomer of formula (h).

9. The two-component system according to any of the preceding claims, wherein the monomer mixture comprises or essentially consists of the monomer of formula (a), a monomer of formula (b), a monomer of formula (d), and a monomer of formula (e), and a monomer of formula (m).

10. The two-component system according to any of the preceding claims, wherein the monomer mixture comprises or essentially consists of the monomer of formula (a), a monomer of formula (b), a monomer of formula (d), and a monomer of formula (e), and a monomer of formula (k).

11. The two-component system according to any of the preceding claims, wherein the monomer mixture comprises or essentially consists of the monomer of formula (a), a monomer of formula (b), a monomer of formula (d), and a monomer of formula (e), a monomer of formula (h), and a monomer of formula (k).

12. The two-component system according to any of the preceding claims, wherein the monomer mixture comprises or essentially consists of the monomer of formula (a), a monomer of formula (b), a monomer of formula (d), and a monomer of formula (e), a monomer of formula (h), and a monomer of formula (m).

13. The two-component system according to any of the preceding claims, wherein the monomer mixture comprises or essentially consists of the monomer of formula (a), a monomer of formula (b), a monomer of formula (d), and a monomer of formula (e), a monomer of formula (h), a monomer of formula (k), and a monomer of formula (m).

14. Use of a two-component system according to any of the preceding claims as acrylate structural adhesive.

15. A method of bonding two substrates comprising the steps of
(a) mixing the first component as defined in any of the preceding claims and the second component as defined in any of the preceding claims with one another thereby providing a combined first component and the second component;
(b) applying the combined first component and the second component obtained in step (a) to a first substrate and/or a second substrate;
(c) optionally, allowing time to elapse prior to expiry of the open time, e.g. for performing some other action;
(d) adhering the first substrate and the second substrate to one another; and
(e) allowing the combined first component and the second component to cure thereby providing a cured acrylate structural adhesive.

## Patentansprüche

1. Zweikomponentensystem aus
(i) einer ersten Komponente, umfassend ein Monomergemisch, das umfasst oder im Wesentlichen besteht aus
- einem Monomer der Formel (a) H₂C=CR-C(=O)-O-C₂-₁₄-Alkyl-OH;
- einem Monomer der Formel (b) H₂C=CR-C(=O)-OH; und
- einem Monomer der Formel (d) H₂C=CR-C(=O)-O-C₁₋₆-Alkyl(hetero)aryl, wobei
- der (Hetero)aryl-Anteil optional mit einem, zwei oder drei Substituenten substituiert ist, die unabhängig voneinander aus -C₁₋₆-Alkyl ausgewählt sind;
und vorzugsweise zusätzlich dazu mindestens einem Monomer, ausgewählt aus
- einem anderen Monomer der Formel (a) H₂C=CR-C(=O)-O-C₂₋₁₄-Alkyl-OH;
- einem Monomer der Formel (c) H₂C=CR-C(=O)-O-C₂₋₁₈-Alkyl;
- einem Monomer der Formel (e) H₂C=CR-C(=O)-O-C₂₋₁₄-Alkyl-O-P(=O)(OH)₂;
- einem Monomer der Formel (f) H₂C=CR-C(=O)-O-C₂₋₁₄-Alkyl-O-C(=O)-C₁₋₆-alkyl-C(=O)-C₁₋₆-alkyl;
- einem Monomer der Formel (g) H₂C=CR-C(=O)-[O-CH₂-CH₂]ₙ-OH, wobei der Index n eine ganze Zahl innerhalb des Bereichs von 1 bis 12 ist;
- einem Monomer der Formel (h) H₂C=CR-C(=O)-[O-CH₂-CH₂]ₙ-O-C₁₋₆-Alkyl, wobei der Index n eine ganze Zahl innerhalb des Bereichs von 1 bis 12 ist;
- einem Monomer der Formel (i) H₂C=CR-C(=O)-[O-CH₂-CH(CH₃)]ₙ-OH, wobei der Index n eine ganze Zahl innerhalb des Bereichs von 1 bis 12 ist;
- einem Monomer der Formel (j) H₂C=CR-C(=O)-[O-CH₂-CH(CH₃)]ₙ-O-C₁₋₆-Alkyl, wobei der Index n eine ganze Zahl innerhalb des Bereichs von 1 bis 12 ist;
- einem Monomer der Formel (k) H₂C=CR-C(=O)-O-C₂₋₁₄-(Hetero)cycloalkyl, wobei der (Hetero)cycloalkyl-Anteil optional mit einem, zwei oder drei Substituenten substituiert ist, die unabhängig voneinander aus -C₁₋₆-Alkyl ausgewählt sind;
- einem Monomer der Formel (I) H₂C=CR-C(=O)-O-C₁₋₆-Alkyl-C₂₋₁₄-(hetero)cycloalkyl, wobei der (Hetero)cycloalkyl-Anteil optional mit einem, zwei oder drei Substituenten substituiert ist, die unabhängig voneinander aus -C₁₋₆-Alkyl ausgewählt sind;
- einem Monomer der Formel (m) H₂C=CR-C(=O)-O-C₇₋₁₄-Bi- oder Tricycloalkyl, wobei der Bi- oder Tricycloalkyl-Anteil optional mit einem, zwei oder drei Substituenten substituiert ist, die unabhängig voneinander aus -C₁₋₆-Alkyl ausgewählt sind;
- einem Monomer der Formel (n) H₂C=CR-C(=O)-O-C₁₋₆-Alkyl-C₇₋₁₄-bi- oder-tricycloalkyl, wobei der Bi- oder Tricycloalkyl-Anteil optional mit einem, zwei oder drei Substituenten substituiert ist, die unabhängig voneinander aus -C₁₋₆-Alkyl ausgewählt sind;
- einem Monomer der Formel (o) H₂C=CR-C(=O)-O-(Hetero)aryl, wobei der (Hetero)aryl-Anteil optional mit einem, zwei oder drei Substituenten substituiert ist, die unabhängig voneinander aus -C₁₋₆-Alkyl ausgewählt sind;
- einem Monomer der Formel (p) H₂C=CR-C(=O)-O-C₂₋₁₄-Alkyl-O-C(=O)-CR=CH₂;
- einem Monomer der Formel (q) H₂C=CR-C(=O)-[O-CH₂-CH₂]ₙ-O-C(=O)-CR=CH₂, wobei der Index n eine ganze Zahl innerhalb des Bereichs von 1 bis 12 ist;
- einem Monomer der Formel (r) H₂C=CR-C(=O)-O-C₇₋₁₄-Bi- oder Tricycloalkyl-O-C(=O)-CR=CH₂, wobei der Bi- oder Tricycloalkyl-Anteil optional mit einem, zwei oder drei Substituenten substituiert ist, die unabhängig voneinander aus -C₁₋₆-Alkyl ausgewählt sind;
- einem Monomer der Formel (s) H₂C=CR-C(=O)-)-C₁₋₆-Alkyl-C₇₋₁₄-bi- oder-tricycloalkyl-C₁₋₆-alkyl-O-C(=O)-CR=CH₂, wobei der Bi- oder Tricycloalkyl-Anteil optional mit einem, zwei oder drei Substituenten substituiert ist, die unabhängig voneinander aus -C₁₋₆-Alkyl ausgewählt sind;
- einem Monomer der Formel (t) H₂C=CR-C(=O)-[O-CH₂-CH₂]ₙ-O-Phenyl-CR'R"-phenyl-O- [CH₂-CH₂-O]ₙ-C(=O)-CR=CH₂, wobei R' und R" unabhängig voneinander für -H oder -C₁₋₆-Alkyl stehen; wobei der Index n eine ganze Zahl innerhalb des Bereichs von 1 bis 16 ist; und
- einem Monomer der Formel (u) [H₂C=CR-C(=O)-O-C₁₋₆-Alkyl]3-C₂₋₁₄-(hetero)cycloalkyl, wobei der (Hetero)cycloalkyl-Anteil optional mit einem, zwei oder drei Substituenten =O substituiert ist; wobei R in jedem Fall unabhängig voneinander für -H oder -CH₃ steht; und
(ii) einer zweiten Komponente, umfassend
- einen Polymerisationsinitiator,
wobei das Zweikomponentensystem nicht mehr als 5,0 Gew.-% Methylmethacrylat, bezogen auf das Gesamtgewicht des Zweikomponentensystems, oder überhaupt kein Methylmethacrylat umfasst;
wobei die erste Komponente und die zweite Komponente räumlich voneinander getrennt sind; und
wobei die Reaktion der ersten Komponente und der zweiten Komponente nach dem Mischen zu einem Acrylat-Strukturklebstoff führt.

2. Zweikomponentensystem nach Anspruch 1, wobei das Monomergemisch ein Monomer der Formel (a), ein Monomer der Formel (b), ein Monomer der Formel (d) und ein Monomer der Formel (e) umfasst oder im Wesentlichen daraus besteht.

3. Zweikomponentensystem nach einem der vorhergehenden Ansprüche, wobei das Zweikomponentensystem weder Methylacrylat noch Methylmethacrylat noch Tetrahydrofurfurylmethacrylat noch Glycerinformalmethacrylat noch Phenoxyethylmethacrylat umfasst.

4. Zweikomponentensystem nach einem der vorhergehenden Ansprüche, wobei das Monomer der Formel (a) aus der Gruppe bestehend aus Hydroxyethyl(meth)acrylat, Hydroxypropyl(meth)acrylat und Hydroxybutyl(meth)acrylat; vorzugsweise Hydroxyethylacrylat, Hydroxyethylmethacrylat, Hydroxypropylacrylat oder Hydroxypropylmethacrylat ausgewählt ist.

5. Zweikomponentensystem nach einem der vorhergehenden Ansprüche, wobei das Monomer der Formel (b) (Meth)acrylsäure; vorzugsweise Methacrylsäure ist.

6. Zweikomponentensystem nach einem der vorhergehenden Ansprüche, wobei das Monomer der Formel (d) aus der Gruppe bestehend aus Benzyl(meth)acrylat, 2-Phenylethyl(meth)acrylat, 3-Phenylpropyl(meth)acrylat und Furfuryl(meth)acrylat; vorzugsweise Benzylacrylat oder Benzylmethacrylat ausgewählt ist.

7. Zweikomponentensystem nach einem der vorhergehenden Ansprüche, wobei das Monomer der Formel (e) aus der Gruppe bestehend aus 2-(Meth)acryloyloxyethylphosphat, 4-(Meth)acryloyloxybutylphosphat und 10-(Meth)acryloyloxydecylphosphat; vorzugsweise 2-Acryloyloxyethylphosphat oder 2-Methacryloyloxyethylphosphat ausgewählt ist.

8. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e) und ein Monomer der Formel (h) umfasst oder im Wesentlichen daraus besteht.

9. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e) und ein Monomer der Formel (m) umfasst oder im Wesentlichen daraus besteht.

10. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e) und ein Monomer der Formel (k) umfasst oder im Wesentlichen daraus besteht.

11. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e), ein Monomer der Formel (h) und ein Monomer der Formel (k) umfasst oder im Wesentlichen daraus besteht.

12. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e), ein Monomer der Formel (h) und ein Monomer der Formel (m) umfasst oder im Wesentlichen daraus besteht.

13. Zweikomponentensystem nach einem der vorhergehenden Ansprüche, wobei das Monomergemisch das Monomer der Formel (a), ein Monomer der Formel (b), ein Monomer der Formel (d) und ein Monomer der Formel (e), ein Monomer der Formel (h), ein Monomer der Formel (k) und ein Monomer der Formel (m) umfasst oder im Wesentlichen daraus besteht.

14. Verwendung eines Zweikomponentensystems nach einem der vorhergehenden Ansprüche als Acrylat-Strukturklebstoff.

15. Verfahren zum Verkleben von zwei Substraten, umfassend die Schritte:
(a) Vermischen der ersten Komponente, wie in einem der vorhergehenden Ansprüche definiert, und der zweiten Komponente, wie in einem der vorhergehenden Ansprüche definiert, miteinander, wodurch eine kombinierte erste Komponente und die zweite Komponente bereitgestellt werden;
(b) Aufbringen der kombinierten ersten Komponente und der zweiten Komponente, die in Schritt (a) erhalten wurden, auf ein erstes Substrat und/oder ein zweites Substrat;
(c) optional Verstreichenlassen von Zeit vor dem Ablauf der offenen Zeit, z. B. zum Durchführen einer gewissen anderen Aktion;
(d) Anhaften des ersten Substrats und des zweiten Substrats aneinander; und
(e) Härtenlassen der kombinierten ersten Komponente und der zweiten Komponente, um dadurch einen gehärteten Acrylat-Strukturklebstoff bereitzustellen.

## Revendications

1. Un système bicomposant comprenant
(i) un premier composant comprenant un mélange de monomères qui comprend ou consiste essentiellement en
- un monomère de formule (a) H₂C=CR-C(=O)-O-C₂₋₁₄-alkyl-OH ;
- un monomère de formule (b) H₂C=CR-C(=O)-OH ; et
- un monomère de formule (d) H₂C=CR-C(=O)-O-C₁₋₆-alkyl(hétéro)aryle, le fragment (hétéro)aryle étant éventuellement substitué par un, deux ou trois substituants indépendants les uns des autres choisis parmi un groupe alkyle en C₁₋₆ ;
et de préférence en outre au moins un monomère choisi parmi
- un autre monomère de formule (a) H₂C=CR-C(=O)-O-C₂₋₁₄-alkyl-OH ;
- un monomère de formule (c) H₂C=CR-C(=O)-O-C₂₋₁₈-alkyle ;
- un monomère de formule (e) H₂C=CR-C(=O)-O-C₂₋₁₄-alkyl-O-P(=O)(OH)₂ ;
- un monomère de formule (f) H₂C=CR-C(=O)-O-C₂₋₁₄-alkyl-O-C(=O)-C₁₋₆-alkyl-C(=O)-C₁₋₆-alkyle ;
- un monomère de formule (g) H₂C=CR-C(=O)-[O-CH₂-CH_{2]n}-OH, où l'indice n est un nombre entier compris entre 1 et 12 ;
- un monomère de formule (h) H₂C=CR-C(=O)-[O-CH₂-CH₂]ₙ-O-C₁₋₆-alkyle, où l'indice n est un nombre entier compris entre 1 et 12 ;
- un monomère de formule (i) H₂C=CR-C(=O)-[O-CH₂-CH(CH₃)]ₙ-OH,
où l'indice n est un nombre entier compris entre 1 et 12 ;
- un monomère de formule (j) H₂C=CR-C(=O)-[O-CH₂-CH(CH₃)]ₙ-O-C₁₋₆-alkyle, où l'indice n est un nombre entier compris entre 1 et 12 ;
- un monomère de formule (k) H₂C=CR-C(=O)-O-C₂₋₁₄-(hétéro)cycloalkyle, le fragment (hétéro)cycloalkyle étant éventuellement substitué par un, deux ou trois substituants indépendants les uns des autres choisis parmi un groupe alkyle en C₁₋₆ ;
- un monomère de formule (I) H₂C=CR-C(=O)-O-C₁₋₆-alkyl-C₂₋₁₄-(hétéro)cycloalkyle, le fragment (hétéro)cycloalkyle étant éventuellement substitué par un, deux ou trois substituants indépendants les uns des autres choisis parmi un groupe alkyle en C₁₋₆ ;
- un monomère de formule (m) H₂C=CR-C(=O)-O-C₇₋₁₄-bi ou tricycloalkyle, le fragment bi ou tricycloalkyle étant éventuellement substitué par un, deux ou trois substituants indépendants les uns des autres choisis parmi un groupe alkyle en C₁₋₆ ;
- un monomère de formule (n) H₂C=CR-C(=O)-O-C₁₋₆-alkyl-C₇₋₁₄-bi ou tricycloalkyle, le fragment bi ou tricycloalkyle étant éventuellement substitué par un, deux ou trois substituants indépendants les uns des autres choisis parmi un groupe alkyle en C₁₋₆ ;
- un monomère de formule (o) H₂C=CR-C(=O)-O-(hétéro)aryle, le fragment (hétéro)aryle étant éventuellement substitué par un, deux ou trois substituants indépendants les uns des autres choisis parmi un groupe alkyle en C₁₋₆ ;
- un monomère de formule (p) H₂C=CR-C(=O)-O-C₂₋₁₄-alkyl-O-C(=O)-CR=CH₂ ;
- un monomère de formule (q) H₂C=CR-C(=O)-[O-CH₂-CH_{2]}n-O-C(=O)-CR=CH₂, où l'indice n est un nombre entier compris entre 1 et 12 ;
- un monomère de formule (r) H₂C=CR-C(=O)-O-C₇₋₁₄-bi ou tricycloalkyl-O-C(=O)-CR=CH₂, le fragment bi ou tricycloalkyle étant éventuellement substitué par un, deux ou trois substituants indépendants les uns des autres choisis parmi un groupe alkyle en C₁₋₆ ;
- un monomère de formule (s) H₂C=CR-C(=O)-)-C₁₋₆-alkyl-C₇₋₁₄-bi ou tricycloalkyl-C₁₋₆-alkyl-O-C(=O)-CR=CH₂, le fragment bi ou tricycloalkyle étant éventuellement substitué par un, deux ou trois substituants indépendants les uns des autres choisis parmi un groupe alkyle en C₁₋₆ ;
- un monomère de formule (t) H₂C=CR-C(=O)-[O-CH₂-CH₂]n-O-phényl-CR'R"-phényl-O-[CH₂-CH₂-O]ₙ-C(=O)-CR=CH₂, R' et R" représentant indépendamment l'un de l'autre -H ou un groupe alkyle en C₁₋₆ ; où l'indice n est un nombre entier compris entre 1 et 16 ; et
- un monomère de formule (u) [H₂C=CR-C(=O)-O-C₁₋₆-alkyl]₃-C₂₋₁₄-(hétéro)cycloalkyle, le fragment (hétéro)cycloalkyle étant éventuellement substitué par un, deux ou trois substituants =O ; dans chaque cas R représentant indépendamment l'un de l'autre -H ou -CH₃ ; et
(i) un second composant comprenant
- un initiateur de polymérisation ;
le système bicomposant ne comprenant pas plus de 5,0 % en poids de méthacrylate de méthyle, par rapport au poids total du système bicomposant, ou ne comprenant pas du tout de méthacrylate de méthyle ;
le premier composant et le second composant étant séparés spatialement l'un de l'autre ; et
la réaction du premier composant et du second composant après mélange donnant un adhésif structurel acrylate.

2. Système bicomposant selon la revendication 1, le mélange de monomères comprenant ou consistant essentiellement en un monomère de formule (a), un monomère de formule (b), un monomère de formule (d) et un monomère de formule (e).

3. Système bicomposant selon l'une quelconque des revendications précédentes, le système bicomposant ne comprenant ni acrylate de méthyle, ni méthacrylate de méthyle, ni méthacrylate de tétrahydrofurfuryle, ni méthacrylate de glycérol formaldéhyde, ni méthacrylate de phénoxyéthyle.

4. Système bicomposant selon l'une quelconque des revendications précédentes, le monomère de formule (a) étant choisi dans le groupe constitué par le (méth)acrylate d'hydroxyéthyle, le (méth)acrylate d'hydroxypropyle et le (méth)acrylate d'hydroxybutyle ; de préférence parmi l'acrylate d'hydroxyéthyle, le méthacrylate d'hydroxyéthyle, l'acrylate d'hydroxypropyle ou le méthacrylate d'hydroxypropyle.

5. Système bicomposant selon l'une quelconque des revendications précédentes, le monomère de formule (b) étant l'acide (méth)acrylique ; de préférence l'acide méthacrylique.

6. Système à deux composants selon l'une quelconque des revendications précédentes, dans lequel le monomère de formule (d) est choisi dans le groupe constitué par le (méth)acrylate de benzyle, le (méth)acrylate de 2-phényléthyle, le (méth)acrylate de 3-phénylpropyle et le (méth)acrylate de furfuryle ; de préférence parmi l'acrylate de benzyle ou le méthacrylate de benzyle.

7. Système bicomposant selon l'une quelconque des revendications précédentes, le monomère de formule (a) étant choisi dans le groupe constitué par le phosphate de 2-(méth)acryloyloxyéthyle, le phosphate de 4-(méth)acryloyloxybutyle et le phosphate de 10-(méth)acryloyloxydécyle ; de préférence parmi le phosphate de 2-acryloxyéthyle ou le phosphate de 2-méthacryloxyéthyle.

8. Système bicomposant selon l'une quelconque des revendications précédentes, le mélange de monomères comprenant ou consistant essentiellement en un monomère de formule (a), un monomère de formule (b), un monomère de formule (d), un monomère de formule (e) et un monomère de formule (h).

9. Système bicomposant selon l'une quelconque des revendications précédentes, le mélange de monomères comprenant ou consistant essentiellement en un monomère de formule (a), un monomère de formule (b), un monomère de formule (d), un monomère de formule (e) et un monomère de formule (m).

10. Système bicomposant selon l'une quelconque des revendications précédentes, le mélange de monomères comprenant ou consistant essentiellement en un monomère de formule (a), un monomère de formule (b), un monomère de formule (d), un monomère de formule (e) et un monomère de formule (k).

11. Système bicomposant selon l'une quelconque des revendications précédentes, le mélange de monomères comprenant ou consistant essentiellement en un monomère de formule (a), un monomère de formule (b), un monomère de formule (d), un monomère de formule (e), un monomère de formule (h) et un monomère de formule (k).

12. Système bicomposant selon l'une quelconque des revendications précédentes, le mélange de monomères comprenant ou consistant essentiellement en un monomère de formule (a), un monomère de formule (b), un monomère de formule (d), un monomère de formule (e), un monomère de formule (h) et un monomère de formule (m).

13. Système bicomposant selon l'une quelconque des revendications précédentes, le mélange de monomères comprenant ou consistant essentiellement en un monomère de formule (a), un monomère de formule (b), un monomère de formule (d), un monomère de formule (e), un monomère de formule (h), un monomère de formule (k) et un monomère de formule (m).

14. Utilisation d'un système bicomposant selon l'une quelconque des revendications précédentes comme adhésif structural acrylate.

15. Procédé de liaison de deux substrats, comprenant les étapes consistant à
(a) mélanger le premier composant selon l'une quelconque des revendications précédentes et le second composant selon l'une quelconque des revendications précédentes l'un avec l'autre, de manière à produire un premier composant combiné et le second composant ;
(b) appliquer le premier composant combiné et le second composant obtenus à l'étape (a) sur un premier substrat et/ou un second substrat ;
(c) éventuellement, laisser s'écouler un certain temps avant l'expiration du délai d'ouverture, p. ex. pour effectuer une autre action ;
(d) coller le premier substrat et le second substrat l'un à l'autre ; et
(e) laisser durcir le premier composant combiné et le second composant, de manière à produire un adhésif structurel acrylate durci.
